# EUROPEAN PATENT APPLICATION

(11) **EP 4 112 690 A1**
(43) Date of publication of application: **04.01.2023**
(21) Application number: 21760913.0
(22) Date of filing: 26.02.2021
(51) Int. Cl.: C08L 53/02, C08L 101/02

(54) **THERMOPLASTIC ELASTOMER COMPOSITION**

(30) Priority: 28.02.2020 JP 2020034078
(71) Applicant: ENEOS Corporation, Chiyoda-ku Tokyo 100-8162 (JP)
(72) Inventor: CHINO Keisuke, Tokyo 100-8162 (JP)
(74) Representative: Müller-Boré & Partner Patentanwälte PartG mbB
(86) International application number: PCT/JP2021/007562
(87) International publication number: WO 2021/172571

(57) **Abstract**

A thermoplastic elastomer composition comprises the following components (I) and (II):
[component (I)] at least one polymer component selected from the group consisting of particular polymers (A) and particular polymers (B); and
[component (II)] a cross-linked styrene-based block copolymer which contains a covalent-bond cross-linking moiety and no hydrogen-bond cross-linkable moiety.

## Description

### [Technical Field]

The present invention relates to a thermoplastic elastomer composition.

### [Background Art]

Thermoplastic elastomer is an industrially very useful material because it can melt at processing temperature during molding processing and be molded by a well-known resin molding method. In the field of such thermoplastic elastomer compositions, various compositions have been studied in order to exhibit properties suitable for intended use. For example, Japanese Unexamined Patent Application Publication No. 2017-206589 (PTL 1) discloses a thermoplastic elastomer composition comprising at least one elastomer component selected from the group consisting of elastomeric polymers (A) each of which has a side chain containing a hydrogen-bond cross-linkable moiety having a carbonyl-containing group and/or a nitrogen-containing heterocycle and has a glass-transition point of 25°C or below, and elastomeric polymers (B) each of which contains a hydrogen-bond cross-linkable moiety and a covalent-bond cross-linking moiety in a side chain and has a glass-transition point of 25°C or below; an organically modified clay at a content ratio of 20 parts by mass or less relative to 100 parts by mass of the elastomer component; and a lubricant. The thermoplastic elastomer composition described in PTL 1 has sufficiently high workability in extrusion molding. However, even in the thermoplastic elastomer composition as described in PTL 1, the resistance to compression set at high temperature is not necessarily sufficient.

### [Citation List]

### [Patent Literature]

[PTL 1] Japanese Unexamined Patent Application Publication No. 2017-206589

### [Summary of Invention]

### [Technical Problem]

The present invention has been made in view of the problem in the related art, and has an object to provide a thermoplastic elastomer composition that can have excellent resistance to compression set at high temperature and achieve sufficiently high flowability.

### [Solution to Problem]

The present inventors have conducted intensive studies to achieve the above-described object, and consequently have found that when a thermoplastic elastomer composition comprises the following components (I) and (II), the obtained composition can have excellent resistance to compression set at high temperature and achieve sufficiently high flowability. This finding has led to the completion of the present invention.

Specifically, a thermoplastic elastomer composition of the present invention comprises the following components (I) and (II):
[component (I)] at least one polymer component selected from the group consisting of polymers (A) each of which has a side chain (a) containing a hydrogen-bond cross-linkable moiety having a carbonyl-containing group and/or a nitrogen-containing heterocycle and has a glass transition point of 25°C or below, and polymers (B) each of which contains a hydrogen-bond cross-linkable moiety and a covalent-bond cross-linking moiety in a side chain and has a glass-transition point of 25°C or below; and
[component (II)] a cross-linked styrene-based block copolymer which contains a covalent-bond cross-linking moiety and no hydrogen-bond cross-linkable moiety.

In the aforementioned thermoplastic elastomer composition of the present invention, the component (II) is preferably a reaction product of a styrene-based block copolymer having a cross-linkable double bond in a main chain, and a cross-linking agent for reacting with the cross-linkable double bond and thereby forming a cross-linking moiety by a covalent bond. In the present invention, the styrene-based block copolymer having a cross-linkable double bond in a main chain is preferably at least one selected from the group consisting of styrene-butadiene-styrene block copolymers, styrene-isoprene-styrene block copolymers, styrene-isoprene-butadiene-styrene block copolymers, styrene-ethylene-butylene-styrene block copolymers, styrene-ethylene-propylene-styrene block copolymers, and styrene-ethylene-ethylene-propylene-styrene block copolymers.

In the aforementioned thermoplastic elastomer composition of the present invention, the covalent-bond cross-linking moiety that cross-links molecules in the styrene-based block copolymer in the component (II) includes at least one cross-linkage selected from the group consisting of a carbon cross-linkage, an oxygen cross-linkage, and a sulfur cross-linkage.

Moreover, in the thermoplastic elastomer composition of the present invention, a content of the component (II) is preferably 0.1 to 80% by mass of a total mass of the composition.

In the component (I) of the thermoplastic elastomer composition of the present invention, the main chain of each of the polymers (A) and (B) is preferably at least one selected from the group consisting of polypropylenes, polyethylenes, ethylene-butene copolymers, ethylene-propylene copolymers, and ethylene-octene copolymers.

### [Advantageous Effects of Invention]

According to the present invention, it is possible to provide a thermoplastic elastomer composition that can have excellent resistance to compression set at high temperature and achieve sufficiently high flowability.

### [Description of Embodiments]

Hereinafter, the present invention will be described in detail based on preferred embodiments thereof.

A thermoplastic elastomer composition of the present invention comprises the following components (I) and (II):
[Component (I)] at least one polymer component selected from the group consisting of polymers (A) each of which has a side chain (a) containing a hydrogen-bond cross-linkable moiety having a carbonyl-containing group and/or a nitrogen-containing heterocycle and has a glass transition point of 25°C or below, and polymers (B) each of which contains a hydrogen-bond cross-linkable moiety and a covalent-bond cross-linking moiety in a side chain and has a glass-transition point of 25°C or below; and
[Component (II)] a cross-linked styrene-based block copolymer which contains a covalent-bond cross-linking moiety and no hydrogen-bond cross-linkable moiety. Here, the components will be individually described first.

### <Component (I): Polymer Component>

A polymer component as the component (I) according to the present invention is at least one selected from the group consisting of the aforementioned polymers (A) and (B).

In each of the polymers (A) and (B), the "side chain" refers to any of a side chain and a terminal of the polymer. Then, "a side chain (a) containing a hydrogen-bond cross-linkable moiety having a carbonyl-containing group and/or a nitrogen-containing heterocycle" means that a carbonyl-containing group and/or a nitrogen-containing heterocycle (more preferably a carbonyl-containing group and a nitrogen-containing heterocycle) serving as a hydrogen-bond cross-linkable moiety is chemically stably bonded (covalently bonded) to an atom (generally, a carbon atom) forming a main chain of the polymer. In addition, "contains a hydrogen-bond cross-linkable moiety and a covalent-bond cross-linking moiety in a side chain" is a concept including a case where both a side chain having a hydrogen-bond cross-linkable moiety (hereinafter, sometimes referred to as the "side chain (a')" for convenience) and a side chain having a covalent-bond cross-linking moiety (hereinafter, sometimes referred to as the "side chain (b)" for convenience) are contained, so that both the hydrogen-bond cross-linkable moiety and the covalent-bond cross-linking moiety are contained in the side chains of the polymer, and a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as the "side chain (c)" for convenience) is contained, so that both the hydrogen-bond cross-linkable moiety and the covalent-bond cross-linking moiety are contained in the side chain of the polymer.

Here, as the polymer component, the polymer is preferably a polymer having elastomeric properties (elastomeric polymer). For this reason, the polymer component is preferably at least one elastomer component selected from the group consisting of elastomeric polymers (A) each of which has a side chain (a) containing a hydrogen-bond cross-linkable moiety having a carbonyl-containing group and/or a nitrogen-containing heterocycle and has a glass transition point of 25°C or below, and elastomeric polymers (B) each of which contains a hydrogen-bond cross-linkable moiety and a covalent-bond cross-linking moiety in a side chain and has a glass-transition point of 25°C or below. Note that elastomer components preferred as the above polymer component are synonymous with the elastomer components described in Japanese Patent No. 5918878 (JP 5918878 B), and any of those described in paragraphs [0032] to [0145] of this publication can be used suitably.

Then, the main chain of each of such polymer components (the polymers (A) and (B)) (a polymer for forming a main chain portion) is not particularly limited and may be any generally known natural or synthetic polymer having a glass transition point of room temperature (25°C) or below. The main chains of the polymers (A) and (B) are each preferably at least one selected from diene-based rubbers, hydrogenated products of diene-based rubbers, olefin-based rubbers, silicone-based rubbers, chlorosulfonated polyethylene rubbers, epichlorohydrin rubbers, polysulfide rubbers, fluororubbers, acrylic rubbers, urethane rubbers, optionally hydrogenated polystyrene-based polymers, polyolefin-based polymers (preferably high density polyethylenes (HDPE) and polyolefin-based elastomeric polymers), polyvinyl chloride-based polymers (preferably polyvinyl chloride-based elastomeric polymers), polyurethane-based polymers (preferably polyurethane-based elastomeric polymers), polyester-based polymers (preferably polyester-based elastomeric polymers), and polyamide-based polymers (preferably polyamide-based elastomeric polymers). Note that examples of such polyolefin-based polymers include low density polyethylene (LDPE), high density polyethylene (HDPE), linear polyethylene (LLDPE), polypropylene, and the like. Here, when the polymer component contains the elastomeric polymers (A) and (B), the main chain (a polymer for forming a main chain portion) of each of the elastomeric polymers (A) and (B) is not particularly limited and may be any generally known natural or synthetic elastomeric polymer having a glass-transition point of room temperature (25°C) or below (may be a so-called elastomer). As the main chain of each of the elastomeric polymers (A) and (B) (a polymer for forming a main chain portion), it is possible to use a known elastomeric polymer having a glass-transition point of room temperature (25°C) or below as appropriate (for example, any of those described in paragraphs [0033] to [0036] of JP 5918878 B). The main chain of the polymer component (the polymers (A) and (B)) is preferably a hydrogenated product of a diene-based rubber, an olefin-based polymer, or a polyolefin-based polymer from the viewpoint that it does not contain an aging-prone double bond. It is preferable that the main chain of the polymer component (the polymers (A) and (B)) contain no cross-linkable double bond from the viewpoint that the main chain may not react with a cross-linking agent (A) described below.

In addition, from the viewpoint that the balance between compression set and flowability can be better, the main chain of each of the polymers (A) and (B) in the polymer component is more preferably at least one selected from the group consisting of polypropylenes, polyethylenes, ethylene-butene copolymers, ethylene-propylene copolymers, and ethylene-octene copolymers, and particularly preferably at least one selected from the group consisting of polypropylenes, polyethylenes (more preferably high density polyethylenes (HDPE)), and ethylene-butene copolymers. Note that the high density polyethylene refers to polyethylene having a density of 0.93 g/cm³ or more.

In addition, as the polymer component, one of the polymers (A) and (B) may be used alone or a mixture of two or more of them may be used. Then, the glass-transition point of such polymers (A) and (B) is 25°C or below as described above. When the polymers (A) and (B) are elastomeric polymers, they exhibit rubber-like elasticity at room temperature. Additionally, in the present invention, the "glass-transition point" is a glass-transition point measured by differential scanning calorimetry (DSC). In the measurement, the rate of temperature rise is preferably set to 10°C/min. As the polymer component, it is preferable to use a polymer (A) containing no cross-linkable double bond and/or a polymer (B) containing no cross-linkable double bond from the viewpoint that the polymer component may not react with the cross-linking agent (A) described below.

Moreover, as described above, each of the polymers (A) and (B) has, as a side chain, at least one type of: a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety. Note that, in the present invention, the side chain (c) can also be regarded as a side chain functioning as both of a side chain (a') and a side chain (b). Hereinafter, these side chains will be described.

### <Side Chain (a'): Side Chain Containing Hydrogen-Bond Cross-Linkable Moiety>

The side chain (a') containing a hydrogen-bond cross-linkable moiety may be any side chain which has a group capable of forming a cross-linkage by a hydrogen bond (for example, a hydroxy group, a hydrogen-bond cross-linkable moiety contained in the side chain (a) described later, or the like) and can form a hydrogen bond on the basis of the group, and the structure thereof is not particularly limited. Here, the hydrogen-bond cross-linkable moiety is a moiety in which polymer molecules (more preferably elastomer molecules) can be cross-linked by a hydrogen bond. Note that the cross-linkage by a hydrogen bond is formed only when there are a hydrogen acceptor (such as a group having an atom containing lone pair electrons) and a hydrogen donor (such as a group having a hydrogen atom covalently bonded to an atom having a high electronegativity). Hence, when both a hydrogen acceptor and a hydrogen donor are not present in side chains of polymer molecules (more preferably elastomer molecules), a cross-linkage by a hydrogen bond is not formed. For this reason, only when both a hydrogen acceptor and a hydrogen donor are present in side chains of polymer molecules (more preferably elastomer molecules), a hydrogen-bond cross-linkable moiety is present in the system. Note that, in the present invention, if both a portion that can function as a hydrogen acceptor (for example, a carbonyl group or the like) and a portion that can function as a hydrogen donor (for example, a hydroxy group or the like) are present in side chains of polymer molecules (more preferably elastomer molecules), the portion that can function as the hydrogen acceptor and the portion that can function as the donor in the side chains can be determined as a hydrogen-bond cross-linkable moiety.

The hydrogen-bond cross-linkable moiety in such a side chain (a') is more preferably a side chain (a) described later from the viewpoint that a stronger hydrogen bond can be formed. Moreover, from the same viewpoint, the hydrogen-bond cross-linkable moiety in the side chain (a') is more preferably a hydrogen-bond cross-linkable moiety having a carbonyl-containing group and a nitrogen-containing heterocycle.

### <Side Chain (a): Side Chain Containing Hydrogen-bond cross-linkable moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any side chain having a carbonyl-containing group and/or a nitrogen-containing heterocycle, and the other aspects of the structure are not particularly limited. This hydrogen-bond cross-linkable moiety more preferably has both a carbonyl-containing group and a nitrogen-containing heterocycle.

The carbonyl-containing group is not particularly limited and may be any group containing a carbonyl group. Specific examples thereof include amide, ester, imide, carboxyl group, carbonyl group, and the like. The carbonyl-containing group may be a group introduced to the main chain (the polymer of the main chain portion) by using a compound capable of introducing a carbonyl-containing group to the main chain. The compound capable of introducing a carbonyl-containing group to the main chain is not particularly limited, and specific examples thereof include ketones, carboxylic acids, derivatives thereof, and the like. Note that, as a compound capable of introducing a carbonyl-containing group to the main chain such as a carboxylic acid or a derivative thereof, it is possible to use any known one as appropriate (for example, any of those described in paragraphs [0051] to [0053] of JP 5918878 B or the like). In addition, such a compound capable of introducing a carbonyl group (carbonyl-containing group) is preferably a cyclic acid anhydride such as succinic anhydride, maleic anhydride, glutaric anhydride, or phthalic anhydride, and is particularly preferably maleic anhydride.

In addition, when the side chain (a) has a nitrogen-containing heterocycle, the structure and the like of the nitrogen-containing heterocycle are not particularly limited, as long as the nitrogen-containing heterocycle is introduced to the main chain directly or through an organic group. As the nitrogen-containing heterocycle, it is also possible to use a heterocycle having a heteroatom other than a nitrogen atom, such as a sulfur atom, an oxygen atom, or a phosphorus atom, in the heterocycle, as long as the heterocycle contains the nitrogen atom. Here, the use of the nitrogen-containing heterocycle in the side chain (a) is preferable because the presence of the heterocycle structure results in a stronger hydrogen bond forming a cross-linkage, so that the obtained composition has an improved tensile strength. As this nitrogen-containing heterocycle, it is possible to use any known one as appropriate (for example, any of those described in paragraphs [0054] to [0067] of JP 5918878 B or the like). This nitrogen-containing heterocycle may include a substituent.

The nitrogen-containing heterocycle is preferably at least one selected from a triazole ring, an isocyanurate ring, a thiadiazole ring, a pyridine ring, an imidazole ring, a triazine ring, and a hydantoin ring each of which may have a substituent, and is preferably at least one selected from a triazole ring, an isocyanurate ring, a thiadiazole ring, a pyridine ring, an imidazole ring, and a hydantoin ring each of which may have a substituent, because of excellence in recyclability, compression set, hardness, and mechanical strengths, especially, tensile strength. Examples of the substituent that the nitrogen-containing heterocycle may have include a hydroxy group, a thiol group, an amino group, a carboxyl group, an isocyanate group, an epoxy group, an alkoxysilyl group, an ether group, an ester group, an amide group, and the like.

In addition, when the side chain (a) contains both the above-described carbonyl-containing group and the above-described nitrogen-containing heterocycle, the above-described carbonyl-containing group and the above-described nitrogen-containing heterocycle may be introduced to the main chain as side chains independent from each other, but are preferably introduced to the main chain as a single side chain in which the above-described carbonyl-containing group and the above-described nitrogen-containing heterocycle are linked to each other through another group. The structure of such side chain (a) may be, for example, any of those described in paragraphs [0068] to [0081] of JP 5918878 B.

Further, regarding the side chain (a), it is preferable that the side chain (a) be a side chain of a polymer in which a hydrogen-bond cross-linkable moiety is formed by: using, as a polymer which can form the main chain after reaction (a material for polymer formation (more preferably a material for elastomeric polymer formation)), a polymer having, as a functional group, a cyclic acid anhydride group (more preferably a maleic anhydride group) (polymer having a cyclic acid anhydride group in a side chain); and reacting the functional group (cyclic acid anhydride group) with a compound which can form a hydrogen-bond cross-linkable moiety (compound capable of introducing a nitrogen-containing heterocycle) upon a reaction with the cyclic acid anhydride group. The above compound which can form a hydrogen-bond cross-linkable moiety (compound capable of introducing a nitrogen-containing heterocycle) may be any of the above nitrogen-containing heterocycles itself, or may be a nitrogen-containing heterocycle having a substituent (for example, a hydroxy group, a thiol group, an amino group, or the like) that can react with a cyclic acid anhydride group such as maleic anhydride.

### <Side Chain (b): Side Chain Containing Covalent-Bond Cross-Linking Moiety>

In the present description, the "side chain (b) containing a covalent-bond cross-linking moiety" means a side chain containing a moiety in which polymer molecules forming the main chain are cross-linked to each other by a covalent bond (a covalent-bond cross-linking moiety: for example, a moiety which can be formed by a reaction of maleic anhydride with a compound that can react with the maleic anhydride and in which the polymer molecules are cross-linked by a chemically stable bond (covalent bond) such as at least one bond selected from the group consisting of amide, ester, and thioester, or the like). As described above, the "covalent-bond cross-linking moiety" in the present specification is a moiety in which polymer molecules are cross-linked to each other by a covalent bond. Here, the side chain (b) is a side chain containing a covalent-bond cross-linking moiety. When the side chain (b) has a covalent-bond cross-linking moiety and further has a group capable of forming a hydrogen bond to form a cross-linkage between side chains by a hydrogen bond, the side chain (b) is used as a side chain (c) described later (note that, when both a hydrogen donor and a hydrogen acceptor, which allow the formation of a hydrogen bond between side chains of the polymer (preferably elastomer) molecules, are not contained, for example, when only side chains simply containing ester groups (-COO-) are present in the system, the groups do not function as a hydrogen-bond cross-linkable moiety, because two ester groups (-COO-) do not form a hydrogen bond in particular. Meanwhile, for example, when each side chain of the polymer contains a structure having both a moiety to serve as a hydrogen donor and a moiety to serve as a hydrogen acceptor to form a hydrogen bond such as a carboxyl group and a triazole ring, a hydrogen bond is formed between the side chains of the polymers (more preferably elastomers), and hence a hydrogen-bond cross-linkable moiety is contained. Instead, for example, when an ester group and a hydroxy group are coexistent in side chains of molecules of the resin, and these groups form a hydrogen bond between the side chains, the moiety to form the hydrogen bond serves as a hydrogen-bond cross-linkable moiety. For this reason, the side chain (b) may be used as the side chain (c) in some cases depending on the structure of the side chain (b) itself, the structure of the side chain (b) and a type of a substituent contained in another side chain, or the like).

The side chain (b) containing a covalent-bond cross-linking moiety is not particularly limited but is preferably a side chain containing a covalent-bond cross-linking moiety formed by a reaction of, for example, a polymer having a functional group in a side chain (a polymer for forming a main chain portion (note that such a polymer having a functional group in a side chain is preferably an elastomeric polymer having a functional group in a side chain)) with a compound that can form a covalent-bond cross-linking moiety (compound that can generate a covalent bond) upon a reaction with the functional group. The cross-linkage at the covalent-bond cross-linking moiety in the side chain (b) is preferably formed by at least one bond selected from the group consisting of amide, ester, lactone, urethane, ether, thiourethane, and thioether. For this reason, the functional group of the polymer for forming a main chain portion (hereinafter sometimes referred to as the "polymer for constituting the main chain") is preferably a functional group capable of creating at least one bond selected from the group consisting of amide, ester, lactone, urethane, ether, thiourethane, and thioether.

Examples of the "compound that can form a covalent-bond cross-linking moiety (compound that can generate a covalent bond)" include polyamine compounds having two or more amino and/or imino groups in one molecule (when both amino and imino groups are present, the total number of these groups is two or more) ; polyol compounds having two or more hydroxy groups in one molecule; polyisocyanate compounds having two or more isocyanate (NCO) groups in one molecule; polythiol compounds having two or more thiol groups (mercapto groups) in one molecule; and the like. The "compound that can form a covalent-bond cross-linking moiety (compound that can generate a covalent bond)" herein can act as a compound capable of introducing both the hydrogen-bond cross-linkable moiety and the covalent-bond cross-linking moiety depending on the type of the substituent contained in the compound, the degree of the progress of a reaction in a case where the reaction is carried out by using the compound, or the like (for example, when a covalent-bond cross-linking moiety is formed by using a compound having three or more hydroxy groups, two of the hydroxy groups react with functional groups of a polymer having the functional groups in side chains (more preferably an elastomeric polymer having the functional groups in side chains), and the remaining one hydroxy group is left as a hydroxy group in some cases depending on the degree of the progress of the reaction, and in this case, a moiety that can form a hydrogen-bond cross-linkage can also be introduced). For this reason, the examples of the "compound that can form a covalent-bond cross-linking moiety (compound that can generate a covalent bond)" listed herein also include a "compound that can form both a hydrogen-bond cross-linkable moiety and a covalent-bond cross-linking moiety". In the case of forming the side chain (b) from this viewpoint, the side chain (b) may be formed by selecting a compound as appropriate according to a target design from the "compounds that can each form a covalent-bond cross-linking moiety (compounds that can each generate a covalent bond)", controlling the degree of the progress of the reaction as appropriate, or doing the like. Note that when the compound that can form a covalent-bond cross-linking moiety has a heterocycle, it is possible to also simultaneously produce a hydrogen-bond cross-linkable moiety more efficiently, and it is possible to efficiently form a side chain having a covalent-bond cross-linking moiety as the side chain (c) described later. For this reason, specific examples of the compound having a heterocycle will be described especially together with the side chain (c) as preferred compounds for producing the side chain (c). Note that because of its structure, the side chain (c) can also be regarded as a preferred mode of side chains such as the side chain (a) and the side chain (b).

As the polyamine compounds, the polyol compounds, the polyisocyanate compounds, and the polythiol compounds usable as the "compound that can form a covalent-bond cross-linking moiety (compound that can generate a covalent bond)", it is possible to use known ones as appropriate (for example, those described in paragraphs [0094] to [0106] of JP 5918878 B and the like) .

In addition, such a "compound that can form a covalent-bond cross-linking moiety (compound that can generate a covalent bond)" is preferably polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), or polypropylene glycol stearylamine (for example, N,N-bis(2-methyl-2-hydroxyethyl)stearylamine).

A functional group which is contained in the polymer for constituting the main chain, and which will react with the "compound that can form a covalent-bond cross-linking moiety (compound that can generate a covalent bond)" is preferably a functional group which can create (generate: form) at least one bond selected from the group consisting of amide, ester, lactone, urethane, thiourethane, and thioether. Preferred examples of such functional group include cyclic acid anhydride groups, hydroxy groups, amino groups, carboxyl groups, isocyanate groups, thiol groups, and the like.

### <Side Chain (c): Side Chain Containing Both Hydrogen-Bond Cross-Linkable Moiety and Covalent-Bond Cross-Linking Moiety>

The side chain (c) is a single side chain containing both a hydrogen-bond cross-linkable moiety and a covalent-bond cross-linking moiety. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a). In addition, as the covalent-bond cross-linking moiety contained in the side chain (c), the same covalent-bond cross-linking moiety as that in the side chain (b) can be used (the same cross-linkages can be used as preferred cross-linkages thereof).

The side chain (c) is preferably one formed by a reaction of a polymer having a functional group in a side chain (the polymer for forming a main chain portion: more preferably an elastomeric polymer having a functional group in a side chain) with a compound that can form both a hydrogen-bond cross-linkable moiety and a covalent-bond cross-linking moiety upon a reaction with the functional group (compound that can introduce both a hydrogen-bond cross-linkable moiety and a covalent-bond cross-linking moiety).

The compound that can form both a hydrogen-bond cross-linkable moiety and a covalent-bond cross-linking moiety (compound that can introduce both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (compound that can generate a covalent bond). Among all, more preferable ones are heterocycle-containing polyols, heterocycle-containing polyamines, heterocycle-containing polythiols, and the like. Note that, as the heterocycle-containing polyols, polyamines, and polythiols, it is possible to use, as appropriate, the same polyol compounds, polyamine compounds, and polythiol compounds as described above for the "compound that can form a covalent-bond cross-linking moiety (compound that can generate a covalent bond)" except that a heterocycle (particularly preferably a nitrogen-containing heterocycle) must be contained. In addition, as the heterocycle-containing polyols, polyamines, and polythiols, it is possible to use known ones as appropriate (for example, those described in paragraph [0113] of JP 5918878 B). Note that the functional group which is contained in the polymer for constituting the main chain, and which will react with the "compound that can form both a hydrogen-bond cross-linkable moiety and a covalent-bond cross-linking moiety (compound that can introduce both a hydrogen-bond cross-linkable moiety and a covalent-bond cross-linking moiety)" is preferably a functional group which can create (generate: form) at least one bond selected from the group consisting of amide, ester, lactone, urethane, thiourethane, and thioether. Preferred examples of such a functional group include a cyclic acid anhydride group, a hydroxy group, an amino group, a carboxyl group, an isocyanate group, a thiol group, and the like.

### <Structures Preferred as Covalent-Bond Cross-Linking Moieties in Side Chains (b) and (c)>

Regarding the side chains (b) and/or (c), a case where the cross-linkage at the covalent-bond cross-linking moiety contains a tertiary amino bond (-N=) or an ester bond (-COO-) and the binding site of the bond also functions as a hydrogen-bond cross-linkable moiety is preferable because the compression set and the mechanical strengths (elongation at break and strength at break) of the obtained composition are improved to higher levels. When a tertiary amino bond (-N=) or an ester bond (-COO-) in a side chain having a covalent-bond cross-linking moiety forms a hydrogen bond with another side chain as described above, the covalent-bond cross-linking moiety containing the tertiary amino bond (-N=) or the ester bond (-COO-) also has a hydrogen-bond cross-linkable moiety, and can function as the side chain (c).

Preferred examples of a compound that can form a covalent-bond cross-linking moiety containing the tertiary amino bond and/or the ester bond upon a reaction with a functional group of the polymer for constituting the main chain (compound capable of forming both a hydrogen-bond cross-linkable moiety and a covalent-bond cross-linking moiety) include polyethylene glycol laurylamine (for example, N,N-bis(2-hydroxyethyl)laurylamine), polypropylene glycol laurylamine (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine).

The above-described cross-linkage at the covalent-bond cross-linking moiety in the side chain (b) and/or the side chain (c) is preferably one containing at least one structure represented by any one of the following general formulae (1) to (3), and is more preferably one in which G in the formulae contains a tertiary amino bond or an ester bond (note that when a structure shown below contains a hydrogen-bond cross-linkable moiety, the side chain having the structure is used as a side chain (c)).

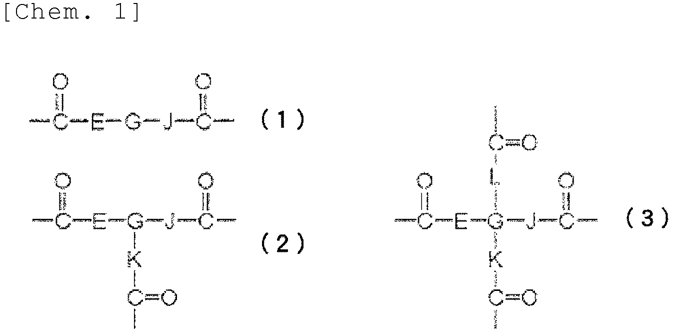

In the above general formulae (1) to (3), E, J, K, and L are each independently a single bond; an oxygen atom, an amino group NR' (where R' is a hydrogen atom or an alkyl group having 1 to 10 carbon atoms), or a sulfur atom; or an organic group optionally containing any of these atoms or groups, and G is a linear-chain, branched-chain, or cyclic hydrocarbon group having 1 to 20 carbon atoms and optionally containing an oxygen atom, a sulfur atom, or a nitrogen atom.

The substituent G is preferably any of the groups represented by the following general formulae (111) to (114), and more preferably the group represented by the following general formula (111) or the group represented by the following general formula (112) from the viewpoints that heat resistance is high and strength is enhanced thanks to hydrogen bonds.

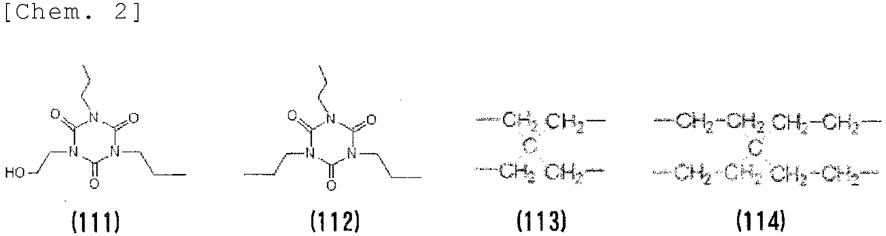

In addition, the cross-linkage at the above-described covalent-bond cross-linking moiety in each of the side chains (b) and (c) is preferably formed by a reaction of a cyclic acid anhydride group with a hydroxy group or an amino group and/or an imino group. For example, when a polymer for forming a main chain portion after a reaction has a cyclic acid anhydride group (for example, a maleic anhydride group) as a functional group, the cross-linkage may be formed by: reacting the cyclic acid anhydride group of the polymer with the compound that can form a covalent-bond cross-linking moiety (compound that can generate a covalent bond) having a hydroxy group or an amino group and/or an imino group, thereby forming a moiety cross-linked by the covalent bond and cross-linking the polymer molecules.

In addition, the cross-linkage at the covalent-bond cross-linking moiety of each of the side chains (b) and (c) is more preferably formed by at least one bond selected from the group consisting of amide, ester, lactone, urethane, ether, thiourethane, and thioether.

Hereinabove, the side chain (a'), the side chain (a), the side chain (b), and the side chain (c) are described. The groups (structures) and the like of these side chains in the polymers can be identified by ordinarily used analytic techniques such as NMR and IR spectrometry.

As the polymer component (more preferably the elastomer component), one of the polymers (A) and (B) may be used alone, or a mixture of two or more thereof may be used. Note that the polymer (B) (more preferably the elastomeric polymer (B)) may be either a polymer having both a side chain (a') and a side chain (b), or a polymer having a side chain (c). From the viewpoint that a stronger hydrogen bond is formed, the hydrogen-bond cross-linkable moiety contained in the side chain of the polymer (B) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle). In addition, the cross-linkage at the covalent-bond cross-linking moiety contained in the side chain of the polymer (B) is preferably formed by at least one bond selected from the group consisting of amide, ester, lactone, urethane, ether, thiourethane, and thioether from the viewpoint that it is possible to cause intermolecular interactions such as a hydrogen bond between side chains containing the cross-linking moieties.

A method for producing such polymers (A) and (B) is not particularly limited, and it is possible to employ any known method as appropriate (for example, any of the methods described in JP 5918878 B (such as the methods described in paragraphs [0139] to [0140]). In addition, as the method for producing the polymers (A) and (B), it is possible to employ, for example, a method for producing a polymer having the side chain (a); a polymer having the side chain (a') and the side chain (b); and/or a polymer having the side chain (c) by: using a polymer having a functional group (for example, a cyclic acid anhydride group or the like) in a side chain (more preferably an elastomeric polymer having a functional group in a side chain); and reacting the polymer with at least one raw material compound of a compound that can form a hydrogen-bond cross-linkable moiety upon a reaction with the functional group, and a raw material mixture of a compound that can form a hydrogen-bond cross-linkable moiety upon a reaction with the functional group and a compound that can form a covalent-bond cross-linking moiety upon a reaction with the functional group. Note that conditions (such as temperature and atmosphere conditions) employed for the reaction are not particularly limited, and may be set, as appropriate, according to the types of the functional group and the compound to be reacted with the functional group (the compound that can form a hydrogen-bond cross-linkable moiety and/or the compound that can form a covalent-bond cross-linking moiety). Here, the polymer (A) may also be produced by polymerization of monomers having hydrogen bonding moieties.

The polymer having a functional group in a side chain (more preferably an elastomeric polymer having a functional group in a side chain) is preferably a polymer that can form a main chain of the above-described polymer (A) or (B) and that has the functional group in the side chain. Here, the "polymer having a functional group in a side chain" refers to a polymer in which a functional group (the above-described functional group or the like, for example, a cyclic acid anhydride group or the like) is chemically stably bonded (covalently bonded) to an atom forming the main chain, and it is possible to preferably use one obtained by a reaction of a polymer (for example, a known natural polymer or synthetic polymer) with a compound capable of introducing a functional group.

In addition, the functional group is preferably a functional group capable of forming at least one bond selected from the group consisting of amide, ester, lactone, urethane, ether, thiourethane, and thioether. Among all, a cyclic acid anhydride group, a hydroxy group, an amino group, a carboxyl group, an isocyanate group, a thiol group, or the like is preferable, and a cyclic acid anhydride group is particularly preferable. Moreover, the cyclic acid anhydride group is preferably a succinic anhydride group, a maleic anhydride group, a glutaric anhydride group, or a phthalic anhydride group, among which a maleic anhydride group is more preferable from the viewpoint that the maleic anhydride group can be easily introduced into a side chain of a polymer and is industrially readily available. In addition, when the functional group is a cyclic acid anhydride group, the functional group may be introduced to a polymer (for example, a known natural polymer or synthetic polymer: note that this polymer is preferably an elastomeric polymer) by using, for example, a cyclic acid anhydride such as succinic anhydride, maleic anhydride, glutaric anhydride, phthalic anhydride, or a derivative thereof, as a compound capable of introducing a functional group.

In addition, from the viewpoints that the polymer component is industrially readily available and a high-level of a balance between mechanical strength and resistance to compression set can be achieved, at least one polymer component selected from the group consisting of the polymers (A) and (B) is preferably at least one selected from the group consisting of reaction products of:
a polymer having a cyclic acid anhydride group in a side chain; and
at least one compound (hereinafter, simply referred to as the "compound (X)" in some cases) among triazoles optionally having at least one substituent selected from hydroxy groups, thiol groups, and amino groups, pyridines optionally having at least one substituent selected from hydroxy groups, thiol groups, and amino groups, thiadiazoles optionally having at least one substituent selected from hydroxy groups, thiol groups, and amino groups, imidazoles optionally having at least one substituent selected from hydroxy groups, thiol groups, and amino groups, isocyanurates optionally having at least one substituent selected from hydroxy groups, thiol groups, and amino groups, triazines optionally having at least one substituent selected from hydroxy groups, thiol groups, and amino groups, hydantoins optionally having at least one substituent selected from hydroxy groups, thiol groups, and amino groups, tris(2-hydroxyethyl) isocyanurates, 2,4-diamino-6-phenyl-1,3,5-triazine, pentaerythritol, sulfamides, and polyether polyols. As described above, the polymers (A) and (B) (more preferably the elastomeric polymers (A) and (B)) are each more preferably a reaction product of the polymer having a cyclic acid anhydride group in a side chain with the compound (X). Note that, from the viewpoint that it is possible to generate a hydrogen-bond cross-linkable moiety simultaneously with the generation of a covalent-bond cross-linking moiety, the compound (X) is more preferably pyridine optionally having at least one substituent selected from hydroxy groups, thiol groups, and amino groups, thiadiazole optionally having at least one substituent selected from hydroxy groups, thiol groups, and amino groups, imidazole optionally having at least one substituent selected from hydroxy groups, thiol groups, and amino groups, isocyanurate optionally having at least one substituent selected from hydroxy groups, thiol groups, and amino groups, triazine optionally having at least one substituent selected from hydroxy groups, thiol groups, and amino groups, hydantoin optionally having at least one substituent selected from hydroxy groups, thiol groups, and amino groups, tris(2-hydroxyethyl) isocyanurate, 2,4-diamino-6-phenyl-1,3,5-triazine, pentaerythritol, sulfamide, or polyether polyol.

A method for preparing a reaction product of a polymer having a cyclic acid anhydride group in a side chain and the compound (X) is not particularly limited. For example, it is possible to employ a preparation method by mixing a mixture containing a polymer having a cyclic acid anhydride group in a side chain and the compound (X) under a temperature condition where they can react with each other (preferably 50 to 230°C) (for example, mixing by a pressure kneader). The reaction temperature and the like may be set as appropriate depending on the types of the compound (X) and the cyclic acid anhydride group used and the like.

Further, in the present invention, properties suitable for intended use can be imparted to an obtained composition depending on the type of the polymer component (more preferably the elastomer component). For example, when the polymer (A) is used as the polymer component, the properties stemming from the side chain (a) can be imparted to the composition to a larger degree, and therefore the elongation at break, tensile strength at break, and flowability, in particular, can be improved. Meanwhile, when the polymer (B) is used as the polymer component, the properties stemming from the covalent-bond cross-linking moiety in the side chain can be imparted to the composition to a larger degree, and therefore the resistance to compression set (compression set resistance) can be more improved. Note that, when the polymer (B) is contained as the polymer component, not only the properties stemming from the covalent-bond cross-linking moiety but also the properties stemming from the hydrogen-bond cross-linkable moiety (the hydrogen-bond cross-linkable moiety described for the side chain (a')) can be imparted to the composition, and therefore it is also possible to more improve the compression set resistance while maintaining the flowability (moldability). Thus, it is possible to even more efficiently exhibit desired properties suitable for intended use by changing the type of the side chain, the type of the polymer (B), and so on as appropriate.

In addition, when the polymers (A) and (B) are contained as the polymer component, the content ratio between the polymer (A) and the polymer (B) ([polymer (A)]:[polymer (B)]) is preferably 1:9 to 9:1, and more preferably 2:8 to 8:2 in terms of the mass ratio. If the content ratio of the polymer (A) is less than the lower limit, the flowability (moldability) and the mechanical strength tend to be insufficient. Meanwhile, if the content ratio of the polymer (A) exceeds the upper limit, the resistance to compression set tends to decrease.

In addition, when both the side chains (a') and the side chains (b) derived from the polymer component are present in the composition, the mass ratio between the total amount of the side chains (a') and the total amount of the side chains (b) is preferably 1:9 to 9:1, and more preferably 2:8 to 8:2. If the total amount of the side chains (a') is less than the lower limit, the flowability (moldability) and the mechanical strength tend to be insufficient. Meanwhile, if the total amount of the side chains (a') exceeds the upper limit, the resistance to compression set tends to decrease. Note that such a side chain (a') is a concept including the side chain (a). For this reason, also when only the side chains (a) are contained as the side chains (a'), it is preferable that both the side chains (a) and the side chains (b) be present in the composition at the above-described mass ratio.

### <Component (II): Cross-Linked Styrene-based Block Copolymer>

The component (II) according to the present invention is a cross-linked styrene-based block copolymer which contains a covalent-bond cross-linking moiety and no hydrogen-bond cross-linkable moiety. The "styrene-based block copolymer" mentioned herein may be any copolymer having a styrene block structure in any moiety. The "hydrogen-bond cross-linkable moiety" mentioned herein has the same meaning as explained for the component (I). In the component (II), "contains ... no hydrogen-bond cross-linkable moiety" means that the styrene-based block copolymer does not have any moiety in which molecules in the styrene-based block copolymer or the styrene-based block copolymer and another component can be cross-linked to each other by a hydrogen bond, or does not have a structural portion capable of forming a cross-linkage by a hydrogen bond (for example, a group or the like capable of forming a cross-linkage by a hydrogen bond, such as a hydroxy group or a carbonyl group).

In the component (II), the "covalent-bond cross-linking moiety" may be any moiety in which molecules in the styrene-based block copolymer are cross-linked to each other by a covalent bond, and the form thereof is not particularly limited. The covalent-bond cross-linking moiety in which molecules in the styrene-based block copolymer are cross-linked to each other in the component (II) as described above preferably includes at least one cross-linkage selected from the group consisting of a carbon cross-linkage, an oxygen cross-linkage, and a sulfur cross-linkage and more preferably a carbon cross-linkage from the viewpoints that it can form a stronger cross-linkage and is excellent in the ease of cross-linkage formation.

Moreover, the component (II) is preferably a reaction product of a styrene-based block copolymer having a cross-linkable double bond in the main chain and a cross-linking agent for reacting with the cross-linkable double bond and thereby forming a cross-linking moiety by a covalent bond (hereinafter simply referred to as the "cross-linking agent (A)" in some cases). The "cross-linkable double bond" mentioned herein refers to a double bond capable of forming a cross-linkage (capable of being involved in a cross-linking reaction) such as: a double bond capable of radically reacting with another double bond and forming a cross-linkage upon a radical reaction (double bond capable of being cross-linked by the radical reaction); a double bond capable of forming a cross-linkage upon a vulcanization reaction (cross-linking reaction) using a so-called vulcanizing agent (sulfur or peroxide); a double bond capable of an addition reaction; and a double bond with allyl hydrogen prone to dehydrogenation. The "main chain" mentioned herein refers to a portion other than side chains and the longest molecule chain constituting a skeleton of a structure in a molecule, and "having a cross-linkable double bond in a main chain" means that the styrene-based block copolymer only has to have double bonds capable of forming cross-linkages (capable of being involved in a cross-linking reaction) such that cross-linkable double bonds are present in any portions of the main chain at a ratio of 0.1 mol% or more (the ratio is defined as a ratio of structural units containing the cross-linkable double bonds to all the structural units constituting the main chain (all the monomer units)). For example, in the case where the styrene-based block copolymer having a cross-linkable double bond in a main chain is a styrene-butadiene-styrene block copolymer (SBS) or a styrene-isoprene-styrene block copolymer (SIS), double bonds after polymerization with butadiene or isoprene are cross-linkable. Instead, in the case where the styrene-based block copolymer having a cross-linkable double bond in a main chain is a styrene-ethylene-butylene-styrene block copolymer (SEBS), a styrene-ethylene-propylene-styrene block copolymer (SEPS), or a styrene-ethylene-ethylene-propylene-styrene block copolymer (SEEPS), each of which is produced by hydrogenating SBS or SIS, double bonds are left by controlling the amount of hydrogen added during the production thereof, so that the remaining double bonds are cross-linkable. Instead, a product in which double bonds are introduced into the main chain by copolymerizing a polyfunctional vinyl compound such as divinylbenzene at the time of polymerization may be used favorably.

From the viewpoint that higher cross-linking density and higher oil retaining property can be achieved, the styrene-based block copolymer having a cross-linkable double bond in a main chain (styrene-based block copolymer before cross-linking) as described above is preferably a styrene-butadiene-styrene block copolymer (SBS), a styrene-isoprene-styrene block copolymer (SIS), a styrene-isoprene-butadiene-styrene block copolymer (SIBS), a styrene-ethylene-butylene-styrene block copolymer (SEBS), a styrene-ethylene-propylene-styrene block copolymer (SEPS), or a styrene-ethylene-ethylene-propylene-styrene block copolymer (SEEPS). Among these styrene-based block copolymers each having a cross-linkable double bond in a main chain, SBS, SEBS, SIS, and SEEPS are more preferable and SBS, SEBS, and SEEPS are further preferable. One of the styrene-based block copolymers each having a cross-linkable double bond in a main chain may be used alone, or two or more of them may be used in combination.

Moreover, from the viewpoint that both flowability (surface texture of extruded product/inhibition of oil bleeding) and compression set can be exhibited at higher levels in a well-balanced manner, it is preferable to use a combination of two or more of these styrene-based block copolymers each having a cross-linkable double bond in a main chain. In the case where two or more of the styrene-based block copolymers each having a cross-linkable double bond in a main chain are used, it is preferable to select and use a combination of two or more of them such that one of them has a low cross-linking density after cross-linking (for example, SEBS) and the other one or another one of them has a high cross-linking density after cross-linking (for example, SBS). Use of a combination of SBS and SEBS is preferable. When SBS and SEBS are used in combination as described above, SEBS having only about 1 mol% of cross-linkable double bonds can have a low cross-linking density after cross-linking, whereas SBS having 60 to 90 mol% of cross-linkable double bonds can have a high cross-linking density after cross-linking. When SBS and SEBS are used in combination, it is preferable to use SBS and SEBS such that the mass ratio of them (SBS:SEBS) is 1:9 to 9:1 (more preferably 2:8 to 8:2). When SBS and SEBS are used in combination, it is preferable to combine SEBS with SBS in a radial form from the viewpoint that the compression set resistance (compression/tension) and the flowability can be more improved. The "radial form" of SBS mentioned herein refers to a structure in which molecule chains are bonded radially, whereas a "linear form" refers to a structure in which a molecular structure is in a linear chain form.

Then, the styrene-based block copolymer having a cross-linkable double bond in a main chain is preferably a styrene-based block copolymer in which a styrene content is 10 to 70% by mass (more preferably 20 to 60% by mass). If the styrene content is less than the lower limit, the thermoplastic property tends to decrease along with a decrease in the styrene block component. Meanwhile, if the styrene content exceeds the upper limit, the rubber elasticity tends to decrease along with a decrease in the olefin component. The styrene content in the styrene-based block copolymer can be measured by a method in accordance with the IR method described in JIS K6239 (published in 2007).

Moreover, from the viewpoints of the mechanical strength and the oil absorption performance, the styrene-based block copolymer having a cross-linkable double bond in a main chain has a weight average molecular weight (Mw), a number average molecular weight (Mw), and a degree of dispersion of the molecular weight distribution (Mw/Mn) as follows: Mw is preferably 100,000 to 1,000,000, both inclusive, more preferably 200,000 to 800,000, both inclusive, and further preferably 300,000 to 700,000, both inclusive; Mn is preferably 50,000 to 600,000, both inclusive, more preferably 100,000 to 550,000, both inclusive, and further preferably 150,000 to 500,000, both inclusive; and Mw/Mn is preferably 5 or less and more preferably 1 to 3. The weight average molecular weight (Mw), the number average molecular weight (Mw), and the degree of dispersion of the molecular weight distribution (Mw/Mn) can be obtained by a so-called gel permeation chromatography (GPC) method. As a specific instrument and conditions for measurement of the molecular weight and the like, "Prominence GPC system" manufactured by Shimadzu Corporation can be used.

In addition, in order for the styrene-based block copolymer to exhibit sufficient elastomeric properties, its soft block portion preferably has a glass transition point of -80 to 0°C. The "soft block portion" mentioned herein refers to a segment constituted by non-aromatic monomers in the styrene-based block copolymer. The "glass transition point" mentioned herein is a glass transition point measured by differential scanning calorimetry (DSC) as described above. In the DSC measurement, the rate of temperature rise is preferably set to 10°C/min.

As the styrene-based block copolymer having a cross-linkable double bond in a main chain, any commercially available product having a cross-linkable double bond in a main chain may be used. For example, it is possible to use, as appropriate, any of copolymers: manufactured by Kraton Corporation under the trade names of "G1633", "D1101", "DX410", "G1651", and "D1111"; manufactured by KURARAY CO., LTD. under the trade names of "V9461", "4055", "4077", "4099", and "TUFPRENE A"; manufactured by Asahi Kasei Corporation under the trade names of "H1053" and "H1051"; manufactured by Lee Chang Yung (LCY) Corporation under the trade names of "GP3501", "GP3502", "GP3411", "GP9901", "GP7533", and "GP7551", and the like.

In addition, the cross-linking agent (A) may be any agent capable of forming a cross-linkage by a covalent bond by reacting with the cross-linkable double bond in main chain of the styrene-based block copolymer, and making the cross-linkage formed after the reaction contain a covalent-bond cross-linking moiety and no hydrogen-bond cross-linkable moiety. Agents preferably usable as the cross-linking agent (A) include, but are not particularly limited to, peroxide-based cross-linking agents, sulfur-based cross-linking agents, phenol resin-based cross-linking agents, amino resin-based cross-linking agents, quinone-based cross-linking agents, halogen-based cross-linking agents, azo-based cross-linking agents, aldehyde-based cross-linking agents, epoxy-based cross-linking agents, bipolar compound-based cross-linking agents, and photocross-linking agents. Among them, a peroxide-based cross-linking agents and a sulfur-based cross-linking agent are more preferable and a peroxide-based cross-linking agent is particularly preferable.

The peroxide-based cross-linking agent is not particularly limited, and any cross-linking agent which is made of a known peroxide and is capable of forming a covalent-bond cross-linking moiety formed of a so-called carbon (oxygen) cross-linkage may be used as appropriate. Among all, an organic peroxide is preferable. Examples of the organic peroxide include: dialkyl peroxides such as di-t-butylperoxide, t-butylcumylperoxide, dicumylperoxide, 2,5-dimethyl-2,5-di(t-butylperoxy)hexane, 2,5-dimethyl-2,5-di(t-butylperoxy)hexine-3, 1,3-bis(t-butylperoxyisopropyl)benzene, and 1,1-di(t-hexylperoxy)-3,3,5-trimethylcyclohexane; peroxyesters such as t-butylperoxybenzoate, t-butylperoxyisopropyl monocarbonate, n-butyl-4,4-bis(t-butylperoxy)valerate, 2,5-dimethyl-2,5-di(benzoylperoxy)hexane, and 2,5-dimethyl-2,5-di(benzoylperoxy)hexine-3; and diacyl peroxides such as diacetyl peroxide, lauroyl peroxide, dibenzoylperoxide, p-chlorobenzoylperoxide, and 2,4-dichlorobenzoylperoxide. Among them, 2,5-dimethyl-2,5-di(t-butylperoxy)hexane or 1,3-bis(t-butylperoxyisopropyl)benzene can be used preferably.

The organic peroxide preferably has a one-minute half-life temperature of 50 to 250°C (more preferably 100 to 230°C) from the viewpoint that the processing temperature can be optimized. Examples of the organic peroxide satisfying the above condition include: dialkyl peroxides such as di-t-butylperoxide, t-butylcumylperoxide, dicumylperoxide, 2,5-dimethyl-2,5-di(t-butylperoxy)hexane, 2,5-dimethyl-2,5-di(t-butylperoxy)hexine-3, 1,3-bis(t-butylperoxyisopropyl)benzene, and 1,1-di(t-hexylperoxy)-3,3,5-trimethylcyclohexane; t-butylperoxybenzoate, t-butylperoxyisopropyl monocarbonate, n-butyl-4,4-bis(t-butylperoxy)valerate, 2,5-dimethyl-2,5-di(benzoylperoxy)hexane, 2,5-dimethyl-2,5-di(benzoylperoxy)hexine-3, and the like.

Among these organic peroxides, 2,5-dimethyl-2,5-di(t-butylperoxy)hexane, 2,5-dimethyl-2,5-di(t-butylperoxy)hexine-3, dicumylperoxide, and 1,3-bis(t-butylperoxyisopropyl)benzene are more preferable and 2,5-dimethyl-2,5-di(t-butylperoxy)hexane and 2,5-dimethyl-2,5-di(t-butylperoxy)hexine-3 are particularly preferable from the viewpoint that they have a higher half-life temperature. One of these peroxide-based cross-linking agents may be used alone or two or more of them may be used in combination.

When an organic peroxide (a type of peroxide-based cross-linking agent) is used as the cross-linking agent (A), it is preferable to use a cross-linking aid when obtaining the reaction product. Examples of such cross-linking aid include divinyl compounds such as divinylbenzene; oxime compounds such as p-quinone dioxime and p,p'-dibenzoylquinone dioxime; nitroso compounds such as N-methyl-N-4-dinitrosoaniline and nitrosobenzene; maleimide compounds such as trimethylolpropane-N,N'-m-phenylenedimaleimide; polyfunctional methacrylate monomers such as ethylene glycol dimethacrylate, diethylene glycol dimethacrylate, polyethylene glycol dimethacrylate, trimethylolpropane trimethacrylate, and allyl methacrylate; polyfunctional vinyl monomers such as vinyl butyrate and vinyl stearate; and moreover sulfur, diphenylguanidine, triallyl cyanurate, zinc dimethacrylate, zinc diacrylate, and the like.

Meanwhile, the sulfur-based cross-linking agent is not particularly limited, and it is possible to use, as appropriate, any known sulfur-based cross-linking agent capable of forming a covalent-bond cross-linking moiety by a sulfur cross-linkage by reacting with the cross-linkable double bond. Examples of the sulfur cross-linking agent include sulfur-based vulcanizing agents such as powdered sulfur, precipitated sulfur, highly dispersible sulfur, surface treated sulfur, inert sulfur, oil treated sulfur, dimorpholine disulfide, and alkylphenol disulfide, zinc white, magnesium oxide, litharge, p-quinone dioxime, p-dibenzoylquinone dioxime, tetrachloro-p-benzoquinone, poly-p-dinitrosobenzene, and methylene dianiline. From the viewpoint of reactivity, powdered sulfur, precipitated sulfur, highly dispersible sulfur, surface treated sulfur, inert sulfur, and oil treated sulfur are preferable, among which powdered sulfur and oil treated sulfur are more preferable, and oil treated sulfur is further preferable. One of these sulfur-based cross-linking agents may be used alone, or two or more of them may be used in combination.

When a sulfur-based cross-linking agent is used as the cross-linking agent (A), it is preferable to use a cross-linking aid (vulcanization accelerator and/or vulcanization acceleration aid) when obtaining the reaction product. Preferable examples of the vulcanization accelerator include thiazole-based (MBT, MBTS, ZnMBT, and the like), sulfenamide-based (CBS, DCBS, BBS, and the like), guanidine-based (DPG, DOTG, OTBG, and the like), thiuram-based (TMTD, TMTM, TBzTD, TETD, TBTD, TOTN (tetrakis(2-ethylhexyl) thiuram disulfide), and the like), dithiocarbamate-based (ZTC, NaBDC, and the like), thiourea-based (ETU and the like), and xanthate-based (ZnBX and the like) vulcanization accelerators. Then, preferable examples of the vulcanization acceleration aid include zinc oxide (for example, type III zinc oxide); fatty acids such as stearic acid, acetyl acid, propionic acid, butanoic acid, acrylic acid, and maleic acid; and zinc fatty acids such as zinc acetylate, zinc propionate, zinc butanoate, zinc stearate, zinc acrylate, and zinc maleate, and the like.

As the reaction product of the styrene-based block copolymer having a cross-linkable double bond in a main chain and the cross-linking agent (A), from the viewpoint that the compression set resistance (compression/tension) can be more improved, preferred is a reaction product of at least one selected from the group consisting of SBS, SEBS, SIS, and SEEPS with a peroxide-based cross-linking agent, and more preferred is a reaction product of at least one selected from the group consisting of SBS, SEBS, and SEEPS with a peroxide-based cross-linking agent.

A method for preparing the reaction product of the styrene-based block copolymer having a cross-linkable double bond in a main chain and the cross-linking agent (A) is not particularly limited. For example, it is possible to employ a preparation method by mixing a mixture containing the styrene-based block copolymer having a cross-linkable double bond in a main chain, the cross-linking agent (A), and, if necessary, a cross-lining aid under a temperature condition where the cross-linkable double bond and the cross-linking agent (A) can react with each other (preferably 60 to 250°C) (for example, mixing by a pressure kneader). The temperature condition for the reaction may be set as appropriate to a temperature at which the cross-linking reaction can proceed depending on the type of the cross-linking agent (A) and the like.

### [Composition]

The thermoplastic elastomer composition of the present invention contains the aforementioned components (I) and (II).

In the thermoplastic elastomer composition, the content of the component (I) is not particularly limited but is preferably 1 to 99% by mass, more preferably 10 to 90% by mass, and further preferably 20 to 80% by mass relative to the total mass of the composition. When the content of the component (I) is within the above range, the thermoplastic elastomer composition tends to achieve a higher effect on the flowability. When the content of the component (I) has a value equal to or more than the lower limit value, the compression set resistance (compression/tension) tends to improve.

In the thermoplastic elastomer composition, the content of the component (II) is not particularly limited but is preferably 0.1 to 80% by mass, more preferably 0.5 to 70% by mass, and further preferably 1 to 60% by mass relative to the total mass of the composition. When the content of the component (II) is within the above range, the thermoplastic elastomer composition tends to achieve higher effects on the compression set resistance (compression/tension) and the flowability. More specifically, the compression set resistance (compression/tension) tends to improve more when the content of the component (II) has a value equal to or more than the lower limit value, whereas the flowability tends to improve more when the content of the component (II) has a value equal to or less than the upper limit value.

The content of the component (II) relative to 100 parts by mass of the component (I) is preferably 1 to 3000 parts by mass, more preferably 10 to 2000 parts by mass, further preferably 20 to 1500 parts by mass, particularly preferably 30 to 1000 parts by mass, and most preferably 50 to 750 parts by mass. Thus, when the content of the component (II) relative to 100 parts by mass of the component (I) is within the above range, the thermoplastic elastomer composition tends to achieve higher effects on the compression set resistance (compression/tension) and the flowability. More specifically, the compression set resistance (compression/tension) tends to improve more when the content of the component (II) has a value equal to or more than the lower limit value, whereas the flowability tends to improve more when the content of the component (II) has a value equal to or less than the upper limit value.

From the viewpoint that tensile properties can be further improved, the thermoplastic elastomer composition of the present invention preferably further contains a clay (hereinafter simply referred to as the "component (III)" in some cases). The clay is not particularly limited, and it is possible to use any known clay as appropriate (for example, any of those described in paragraphs [0146] to [0156] of JP 5918878 B and the like). As such a clay, an organically modified clay is preferable from the viewpoint of improvement of the tensile properties. The organically modified clay is not particularly limited, but is preferably a clay organically modified with an organically modifying agent. The organically modifying agent is not particularly limited, and any known organically modifying agent capable of organically modifying a clay can be used as appropriate (for example, any of the agents described in paragraph [0152] in JP 5918878 B).

As the organically modified clay, a quaternary ammonium salt of a clay can be preferably used. As the quaternary ammonium salt of the organically modified clay, it is possible to preferably use a dimethylstearylbenzylammonium salt, a dimethyloctadecylammonium salt, and a mixture of them, and further preferably use a mixture of a dimethylstearylbenzylammonium salt and a dimethyloctadecylammonium salt.

When the component (III) is contained, the content of the component (III) is not particularly limited, but is preferably 20 parts by mass or less, more preferably 0.01 to 10 parts by mass, further preferably 0.05 to 5 parts by mass, and particularly preferably 0.08 to 3 parts by mass relative to 100 parts by mass of the component (I) from the viewpoint that the tensile properties can be further improved.

From the viewpoint that hardness reduction and further improvement in flowability can be achieved, the thermoplastic elastomer composition of the present invention preferably further contains a process oil (hereinafter simply referred to as the "component (IV)" in some cases). The "process oil" is not particularly limited, and any known process oil can be used as appropriate. Examples thereof include paraffin oils (paraffinic oils), naphthene oils (naphthenic oils), aroma oils (aromatic oils), and so on. As the process oil, a commercially available product can be used as appropriate.

Among these process oils, the paraffin oil is particularly preferable from the viewpoints that high compatibility with the elastomer can be obtained and yellowing due to thermal deterioration can be suppressed at a higher level. The paraffin oil preferable as the process oil is not particularly limited and any known paraffin oil (for example, any of those described in paragraphs [0153] to [0157] of Japanese Unexamined Patent Application Publication No. 2017-57323 (JP 2017-57323 A) and the like) may be used as appropriate. Here, it is preferable that a paraffin oil have 60% or more as a percentage (paraffin part: CP) of the number of paraffinic carbon atoms to the total number of carbon atoms when the oil is measured by correlation ring analysis (n-d-M ring analysis) according to ASTM D3238-85 to obtain the percentage of the number of paraffinic carbon atoms to the total number of carbon atoms (CP), a percentage of the number of naphthenic carbon atoms to the total number of carbon atoms (naphthene part: CN), and a percentage of the number of aromatic carbon atoms to the total number of carbon atoms (aromatic part: CA). In addition, in the paraffin oil, a kinematic viscosity at 40°C measured according to JIS K 2283 (published in 2000) is preferably 5 mm²/s to 1000 mm²/s, more preferably 10 to 900 mm²/s, and further preferably 15 to 800 mm²/s. When the kinematic viscosity is within the above range, the flowability of the thermoplastic elastomer composition of the present invention can be further improved. Further, in the paraffin oil, an aniline point measured by a U-tube method according to JIS K 2256 (published in 2013) is preferably 0°C to 150°C, more preferably 10 to 145°C, and further preferably 15 to 145°C. When the aniline point is within the above range, higher compatibility with the elastomer component can be obtained. The methods for measuring the above kinematic viscosity and aniline point, the methods described in paragraphs [0153] to [0157] of JP 2017-57323 A may be employed as appropriate. A method for preparing the process oil is not particularly limited and any known method can be employed as appropriate. As the process oil, a commercially available product may be used.

When the component (IV) is contained, the content of the component (IV) is not particularly limited but is preferably 10 to 2000 parts by mass, more preferably 20 to 1500 parts by mass, further preferably 30 to 1200 parts by mass, and particularly preferably 50 to 1000 parts by mass relative to 100 parts by mass of the component (I) from the viewpoint that hardness reduction and further improvement in flowability can be achieved.

In addition, when the component (IV) is contained, the content of the component (IV) is not particularly limited but is preferably 10 to 2000 parts by mass, more preferably 20 to 1500 parts by mass, further preferably 30 to 1200 parts by mass, and particularly preferably 50 to 1000 parts by mass relative to 100 parts by mass of the component (II) from the viewpoint that hardness reduction and further improvement in flowability can be achieved.

Moreover, the thermoplastic elastomer composition of the present invention may further contain, as needed in addition to the components (III) and (IV), various types of additives such as another polymer, reinforcing agents (a type of bulking agent: for example, silica, carbon black, and so on), bulking agents to which amino groups are introduced, amino group-containing compounds other than the amino group-introduced bulking agents, compounds containing metal elements, anti-aging agents, antioxidants, pigments (dyes), plasticizers other than the above process oils, thixotropy-imparting agents, ultraviolet absorbers, flame retardants, solvents, surfactants (including leveling agents), deodorants (such as baking soda), dispersing agents, dehydrating agents, rust inhibitors, tackiness imparting agents, antistatic agents, fillers other than the clay, lubricants, slip agents, light stabilizers, conductivity imparting agents, antibacterial agents, neutralizing agents, softeners, bulking agents, colorants, and thermally conductive bulking agents. These additives are not particularly limited, and known additives (for example, those described in paragraphs [0169] to [0174] of JP 5918878 B and cited as examples in Japanese Unexamined Patent Application Publication No. 2006-131663 and the like) can be used as appropriate. As the other polymer as the additive, an α -olefin-based resin having no chemical bond cross-linking moiety can be used preferably. As the α-olefin-based resin having no chemical-bond cross-linking moiety, preferably used is any of those described in paragraphs [0204] to [0214] of Japanese Unexamined Patent Application Publication No. 2017-57322.

When the thermoplastic elastomer composition of the present invention contains the additive, the content of the additive is preferably about 0.001 to 20 parts by mass relative to 100 parts by mass of the component (I). When a lubricant is used from the viewpoint of the molding workability, the content of the lubricant is more preferably about 1 to 10 parts by mass relative to 100 parts by mass of the total mass of the component (I) and the component (II). When another polymer is added, the content of the other polymer is preferably about 1 to 1000 parts by mass relative to 100 parts by mass of the component (I).

The thermoplastic elastomer composition of the present invention has a gel fraction (mass basis) of preferably 1 to 99%, more preferably 10 to 95%, and further preferably 20 to 90%. The flowability tends to improve more when the gel fraction is equal to or more than the lower limit, whereas the compression set resistance (such as compression/tension) tends to improve more when the gel fraction is equal to or less than the upper limit. Thus, when the gel fraction is within the above range, the flowability and the compression set resistance (such as compression/tension) tend to be exhibited at higher levels in a well-balanced manner. The value (% by mass) of the gel fraction of the thermoplastic elastomer composition of the present invention is preferably about 0.8 to 1.2 times (further preferably about 0.9 to 1.1 times) as large as the value of the content (% by mass: the feed amount) of the component (II) in the composition. Thus, when the value of the gel fraction is nearly equal to (preferably about 0.8 to 1.2 times and more preferably about 0.9 to 1.1 times larger than) the value of the content (% by mass) of the component (II) in the composition, it is possible to recognize that the gel is composed of the component (II) and therefore also confirm that the component (II) is cross-linked.

The "gel fraction" mentioned herein can be measured by the following method. Specifically, first, a large number of sheet pieces having a size of 5 mm in length, 5 mm in width, and 2 mm in thickness are cut out from a sheet of the thermoplastic elastomer composition, and about 1 g of the sheet pieces are collected and set as a sample for measurement. Next, the mass of the sample for measurement is measured. Separately, a 80-mesh metal mesh made of stainless steel (stainless steel mesh) is prepared and the mass thereof is measured in advance. Then, the sample for measurement is wrapped with the stainless steel mesh whose mass is measured in advance and then is immersed in 300 ml of a solvent (for example, xylene), followed by reflux for 7 hours. As the solvent, it is preferable to select and use a solvent in which the component (I) in the thermoplastic elastomer composition as a measurement target can be dissolved whereas the component (II) is not dissolved. For example, when the component (I) is a polymer component with the main chain composed of polypropylene, xylene can be used preferably. Subsequently, after the reflux for 7 hours, the stainless steel mesh in which the sample for measurement is wrapped is taken out from the solvent, is washed with toluene, then is dried by air current for 24 hours under a temperature condition at room temperature, and thereafter is further dried for 6 hours in a vacuum dryer under conditions at pressure of 1 to 10 Pa and temperature of 50°C. After the drying as described above, the mass of the stainless steel mesh containing the remaining component is measured. Then, the mass of the remaining component is calculated by subtracting the mass of the stainless steel mesh from the measured mass. Next, the mass of the remaining component relative to the mass of the sample for measurement (used amount) is calculated to obtain the gel fraction ([gel fraction (unit: %)] = {(the mass of the remaining component) / (the mass of the sample for measurement)}×100).

A melt flow rate (MFR) of the thermoplastic elastomer composition of the present invention measured at 230°C under loading of 10 kg in accordance with JIS K6922-2 (published in 2010) is preferably 0.01 g/10 min or more, more preferably 0.1 g/10 min or more, and further preferably 1 g/10 min. When the melt flow rate (MFR) has a value equal to or more than the lower limit, a higher level of workability can be exhibited. The melt flow rate (MFR) mentioned herein is a value measured in accordance with the B method described in JIS K6922-2 (published in 2010), and can be measured in the same method as that used in the following section of Examples.

A method for preparing the thermoplastic elastomer composition of the present invention is not particularly limited, and it is preferable to employ a method capable of uniformly mixing the components (I) and (II) (uniformly mixing further the components (III) to (IV) as needed together with the components (I) and (II)). As the method for producing the thermoplastic elastomer composition of the present invention, for example, a method (A) can be favorably employed, the method (A) including:
obtaining a mixture by mixing:
   the polymer having a cyclic acid anhydride group in a side chain (hereinafter simply referred to as the "polymer (P)" in some cases);
   a styrene-based block copolymer having a cross-linkable double bond in a main chain; and
   a cross-linking agent (A) for forming a covalent-bond cross-linking moiety upon a reaction with the cross-linkable double bond,
thereafter further adding, to the mixture, at least one raw material compound of a compound (i) that can form a hydrogen-bond cross-linkable moiety upon a reaction with the cyclic acid anhydride group, and a raw material mixture of the compound (i) and a compound (ii) that can form a covalent-bond cross-linking moiety upon a reaction with the cyclic acid anhydride group, followed by mixing to obtain a thermoplastic elastomer composition containing the aforementioned components (I) and (II). Hereinafter, the above method (A) will be described.

As the "polymer having a cyclic acid anhydride group in a side chain" used in the above method (A), any of the foregoing polymers may be used as appropriate. Here, the polymer having a cyclic acid anhydride group in a side chain (polymer (P)) refers to a polymer in which a cyclic acid anhydride group is chemically stably bonded (covalently bonded) to an atom forming the main chain of the polymer. For example, it is possible to preferably use one obtained by a reaction of a polymer capable of forming a main chain portion of the polymer (A) or (B) with a compound capable of introducing a cyclic acid anhydride group. Examples of the polymer (P) include polyolefin polymers having a cyclic acid anhydride group in a side chain (for example, high density polyethylene (HDPE) having a cyclic acid anhydride group in a side chain, polypropylene (PP) having a cyclic acid anhydride group in a side chain, ethylene propylene copolymer having a cyclic acid anhydride group in a side chain, ethylene butylene copolymer having a cyclic acid anhydride group in a side chain, ethylene octene copolymer having a cyclic acid anhydride group in a side chain, polyolefin-based elastomeric polymer having a cyclic acid anhydride group in a side chain, and the like) and the like. As the polymer (P), it is possible to use any known one as appropriate (for example, any of those described in paragraph [0183] to paragraph [0193] of JP 5918878 B). In addition, from the viewpoints of a high molecular weight and high strength and from the viewpoint that the polymer having no cross-linkable double bond does not react with the cross-linking agent (A) and thereby allows easier control of a reaction such that only a desired reaction can proceed, the polymer (P) is more preferably a polyolefin polymer having a cross-linkable double bond in a side chain and further preferably a maleic anhydride-modified polypropylene, maleic anhydride-modified polyethylene, a maleic anhydride-modified polyethylene polypropylene copolymer, or a maleic anhydride-modified polyethylene polybutylene copolymer.

In addition, as the styrene-based block copolymer having a cross-linkable double bond in a main chain and the cross-linking agent (A), the aforementioned ones may be used as appropriate.

In mixing the styrene-based block copolymer having a cross-linkable double bond in a main chain and the cross-linking agent (A) in the method (A), the amount of the styrene-based block copolymer having a cross-linkable double bond in a main chain added relative to 100 parts by mass of the polymer (P) is preferably 10 to 2000 parts by mass, more preferably 20 to 1500 parts by mass, and further preferably 30 to 100 parts by mass. The amount of the cross-linking agent (A) added relative to 100 parts by mass of the styrene-based block copolymer having a cross-linkable double bond in a main chain is preferably 0.1 to 20 parts by mass, more preferably 0.2 to 15 parts by mass, and further preferably 0.3 to 10.0 parts by mass. The flowability tends to improve more when the amount of the cross-linking agent (A) used is equal to or more than the lower limit, whereas the compression set resistance (such as compression/tension) tends to improve more when the amount of the cross-linking agent (A) used is equal to or less than the upper limit.

In mixing the polymer (P), the styrene-based block copolymer having a cross-linkable double bond in a main chain, and the cross-linking agent (A) in the method (A), it is preferable that a cross-linking aid be further contained in order for the styrene-based block copolymer having a cross-linkable double bond in a main chain and the cross-linking agent (A) to more efficiently react with each other. When the cross-linking aid is used together with the cross-linking agent (A), the amount of the cross-linking aid added relative to 100 parts by mass of the styrene-based block copolymer having a cross-linkable double bond in a main chain is preferably 0.1 to 100 parts by mass, more preferably 1 to 80 parts by mass, and further preferably 2 to 50 parts by mass. When the cross-linking aid is used together with the cross-linking agent (A), the amount of the cross-linking aid used relative to 100 parts by mass of the cross-linking agent (A) is preferably 0.1 to 2000 parts by mass, more preferably 1 to 1500 parts by mass, and further preferably 5 to 1000 parts by mass. When the amount of the cross-linking aid used is within the above range, the cross-linking density can be increased more efficiently and a higher effect on the compression set resistance (such as compression/tension) can be obtained.

In mixing the polymer (P), the styrene-based block copolymer having a cross-linkable double bond in a main chain, and the cross-linking agent (A), the temperature for the mixing is preferably set to 100 to 250°C and more preferably 120 to 230°C from the viewpoint that the mixture can be plasticized and the reaction between the styrene-based block copolymer having a cross-linkable double bond in a main chain and the cross-linking agent (A) can be caused more efficiently. Here, a method for mixing the components is not particularly limited and any of mixing methods using rolls, a kneader, an extruder, an all-purpose mixer, and the like can be employed. The mixing under the above temperature condition makes it possible to cause the styrene-based block copolymer having a cross-linkable double bond in a main chain and the cross-linking agent (A) to react with each other, thereby plasticizing the mixture and also forming the cross-linked styrene-based block copolymer (component (II)) in the mixture.

Moreover, in the method (A), after the mixture is obtained by mixing the polymer (P), the styrene-based block copolymer having a cross-linkable double bond in a main chain, and the cross-linking agent (A), the raw material compound (the compound (i) and/or the compound (ii)) is added to the mixture, followed by mixing.

The compound (i) may be, for example, one of the above nitrogen-containing heterocycles itself, or may be a compound in which a substituent (for example, a hydroxy group, a thiol group, an amino group, or the like) that can react with a cyclic acid anhydride group such as maleic anhydride is bonded to the nitrogen-containing heterocycle (the nitrogen-containing heterocycle containing the substituent). As the compound (i), a compound that can form both of a hydrogen-bond cross-linkable moiety and a covalent-bond cross-linking moiety (a compound capable of introducing both of a hydrogen-bond cross-linkable moiety and a covalent-bond cross-linking moiety concurrently) may be used (here, a side chain having both of a hydrogen-bond cross-linkable moiety and a covalent-bond cross-linking moiety is a preferred mode of a side chain having a hydrogen-bond cross-linkable moiety).

As the compound (ii), any of the same compounds as described above for the "compound that can form a covalent-bond cross-linking moiety (compound that can generate a covalent bond)" can be used preferably (compounds preferred as the compound are also the same) . As the compound (ii), a compound that can form both of a hydrogen-bond cross-linkable moiety and a covalent-bond cross-linking moiety (a compound capable of introducing both of a hydrogen-bond cross-linkable moiety and a covalent-bond cross-linking moiety concurrently) may be used (here, a side chain having both of a hydrogen-bond cross-linkable moiety and a covalent-bond cross-linking moiety is a preferred mode of a side chain having a covalent-bond cross-linking moiety). As the compound that can form both of a hydrogen-bond cross-linkable moiety and a covalent-bond cross-linking moiety, tris(2-hydroxyethyl)isocyanurate and 2,4-diamino-6-phenyl-1,3,5- triazine are particularly preferable.

As the compound (i) and the compound (ii) used as the raw material compound, those described in paragraphs [0203] to [0207] of JP 5918878 B can be used as appropriate. Then, as the raw material compound (the compound (i) and/or the compound (ii)), the aforementioned compound (X) is more preferable. Further, the amount of the compound (i) and the compound (ii) added (the total amount of them: the amount of one of the compounds when only the one compound is used) and an addition method are not particularly limited and may be set as appropriate depending on intended design (the design may be changed in reference to paragraphs [0208] to [0210] of JP 5918878 B).

As the raw material compound (the compound (i) and/or the compound (ii)), tris(2-hydroxyethyl) isocyanurate, sulfamide, pentaerythritol, 2,4-diamino-6-phenyl-1,3,5-triazine, and polyether polyol are preferable and pentaerythritol, 2,4-diamino-6-phenyl-1,3,5-triazine, and tris (2-hydroxyethyl) isocyanurate are further preferable from the viewpoint of the compression set resistance.

Moreover, in adding the raw material compound to the mixture, the amount of the raw material compound added relative to 100 parts by mass of the polymer (P) (100 parts by mass of the elastomeric polymer when the polymer is the elastomeric polymer) is preferably 0.1 to 10 parts by mass, more preferably 0.3 to 7 parts by mass, and further preferably 0.5 to 5.0 parts by mass. When the amount of the raw material compound added is equal to or more than the lower limit, the cross-linking density can be increased more and desired physical properties tend to be more efficiently exhibited. Meanwhile, when the amount of the raw material compound added is equal to or less than the upper limit, the cross-linking density tends to improve more with the generation of excessive branches inhibited.

Moreover, in mixing the mixture after the raw material compound is added to the mixture, the temperature for the mixing is preferably set to 100 to 250°C and more preferably 120 to 230°C from the viewpoint that the mixture can be softened to initiate the reaction instantaneously. When the polymer (P) and the raw material compound react with each other by being mixed under the above temperature condition, the cyclic acid anhydride group in the polymer is opened and the cyclic acid anhydride group and the raw material compound are chemically bonded, so that at least one polymer component (component (I)) selected from the group consisting of the polymers (A) and the polymers (B) can be formed in the mixture. Here, a method for mixing the components is not particularly limited and any of mixing methods using rolls, a kneader, an extruder, an all-purpose mixer, and the like can be employed.

Moreover, in the above preparation of the composition, the aforementioned components (III) and (IV) and other additives may be contained appropriately as needed. The timing and the like for adding the components (III) and (IV) and the other additives are not particularly limited, but it is preferable to add the components (III) and (IV) and the other additives in a stage prior to the addition of the raw material compound (in the stage for obtaining the mixture). In particular, use of the aforementioned component (III) in the stage prior to the addition of the raw material compound (in the stage for obtaining the mixture) makes it possible to more efficiently and more uniformly disperse the aforementioned component (III) in the composition.

The form of the thermoplastic elastomer composition thus obtained is not particularly limited and may be any of various forms such as a pellet form, a vail form, a rod form, a ribbon form, or a sheet form obtained by appropriate molding using a known apparatus such as a pelletizer. The thermoplastic elastomer composition of the present invention can be used as appropriate for use such as daily necessities, automobile parts, electric products, and industrial parts, for example. Having high resistance to compression set at high temperature (125°C), in particular, the thermoplastic elastomer composition of the present invention is usable even under high temperature under which use of a conventional thermoplastic elastomer composition is difficult, and therefore is suitably usable for automobile parts (for example, rubber parts such as a hose, a belt, a bush, and a mount in an engine room) and the like to be used under a high temperature condition.

### [Examples]

Hereinafter, the present invention will be described more specifically on the basis of Examples and Comparative Example; however, the present invention should not be limited to Examples below.

### [Materials used in Examples and so forth]

First, the trade names and other information of materials (such as compounds) used in production of the compositions and the like in Examples and so forth described below are specified individually. In Examples described below, the materials are expressed by the abbreviated names, the names, or the like listed herein.

### (1) Materials for Forming Polymer Component

▪ Maleic PP: maleic anhydride-modified polypropylene (manufactured by RIKEN VITAMIN Co., Ltd. under the trade name of "RIKEAID MG670P", maleic ratio: 1.834% by mass, weight average molecular weight: 153000)
▪ Compound (X1): trishydroxyethyl isocyanurate (manufactured by NISSEI CORPORATION under the trade name of "TANAC P")

### (2) Materials for Forming Cross-linked Styrene-based Block Copolymer

▪ SEBS: styrene-ethylene-butylene-styrene block copolymer (manufactured by Kraton Corporation under the trade name of "G1633", molecular form and others: linear form (the main chain contains cross-linkable double bonds at 0.1 mol% to 1.0 mol%, both inclusive, derived from a butadiene portion before hydrogenation), styrene content: 30% by mass)
▪ SEEPS: styrene-ethylene-ethylene-propylene-styrene block copolymer (manufactured by Kuraray Co., Ltd. under the trade name of "V9461": molecular form and others: the main chain contains cross-linkable double bonds derived from double bonds introduced into an isoprene portion and a styrene portion before hydrogenation), styrene content: 30% by mass)
▪ SBS-(I): styrene-butadiene-styrene block copolymer (manufactured by Kraton Corporation under the trade name of "DX410JS", molecular form and others: radial form (the main chain contains cross-linkable double bonds derived from a butadiene portion), styrene content: 18% by mass, styrene-butadiene deblock content: 60% by mass (the total amount of polystyrene, polybutadiene, styrene-butadiene-styrene triblock, and the like: 40% by mass))
▪ SBS-(II): styrene-butadiene-styrene block copolymer (manufactured by Kraton Corporation under the trade name of "D1101JO", molecular form and others: linear form (the main chain contains cross-linkable double bonds derived from a butadiene portion), styrene content: 31% by mass, styrene-butadiene deblock content: 16% by mass (the total amount of polystyrene, polybutadiene, styrene-butadiene-styrene triblock, and the like: 84% by mass))
▪ Crosslinking agent (I): 2,5-dimethyl-2,5-di(t-butylperoxy)hexine-3 (manufactured by Nippon Oil & Fats Co., Ltd. under the trade name of "PERHEXYNE 25B-40", molecular weight: 286.42, one-minute half-life temperature: 194.3°C)
▪ Crosslinking agent (II): 2,5-dimethyl-2,5-di(t-butylperoxy)hexane (manufactured by Nippon Oil & Fats Co., Ltd. under the trade name of "PERHEXA 25B-40", molecular weight: 290, one-minute half-life temperature: 179.8°C)
▪ Crosslinking agent (III): dicumylperoxide (manufactured by Nippon Oil & Fats Co., Ltd. under the trade name of "PERCUMYL D-40", molecular weight: 270, one-minute half-life temperature: 175.2°C)
▪ Crosslinking agent (IV): α,α'-bis(t-butylperoxy)diisopropyl benzene (manufactured by Nippon Oil & Fats Co., Ltd. under the trade name of "PERBUTYL P-40", molecular weight: 338.49, one-minute half-life temperature: 175.4°C)
▪ Cross-linking aid: triallyl isocyanurate (manufactured by Mitsubishi Chemical Corporation under the trade name of "TAIC WH-60")

### (3) Other additives

▪ Paraffin oil: manufactured by JXTG Nippon Oil & Energy Corporation under the trade name of "300HV-S(J)"
▪ Organically modified clay (manufactured by HOJUN Co., Ltd. under the trade name of "S-BEN WX").

### [Method for Evaluating Properties of Thermoplastic Elastomer Compositions]

Next, a method for evaluating properties of thermoplastic elastomer compositions obtained in Examples and so forth will be described. Tables 1 to 3 present results obtained in each of Examples and Comparative Example.

### <Preparation of Sheets for Measurement>

Using the thermoplastic elastomer composition obtained in each of Examples and so forth, a sheet to be used to evaluate the properties of the composition was prepared in the following way. Specifically, a 2 mm-thickness sheet for measurement was obtained by using a pressure press machine equipped with a function of cooling with water in such a way that the thermoplastic elastomer composition was first heated to 200°C; thereafter, 43 g of the thermoplastic elastomer composition was placed in a mold having a size of 15 cm in length, 15 cm in width, and 2 mm in thickness, heated (preheated) at 200°C for 5 minutes before pressurization, then pressurized (heat-pressed) under conditions of temperature: 200°C, working pressure: 20 MPa, and pressurization time: 5 minutes, and then pressed with cooling with water under conditions of working pressure: 20 MPa and pressurization time: 2 minutes; and then the pressed thermoplastic elastomer composition was taken out from the mold.

### <Measurement of Compression set (C-Set)>

The compression set (C-Set) of the thermoplastic elastomer composition obtained in each of Examples and so forth was determined by using the corresponding one of the sheets for measurement obtained as described above. First, a sample was prepared by punching out the above sheet for measurement into sheet pieces in a disc shape with a diameter of 29 mm, and stacking seven sheet pieces at a height (thickness) of 12.5±0.5 mm. The sample thus obtained was used and compressed by 25% with a special jig and left at 125°C for 22 hours, and then the compression set (unit: %) of the sample was measured in accordance with JIS K6262 (published in 2013). A compression device manufactured by DUMBBELL CO., LTD. under the trade name "Vulcanized Rubber Compression Set Test Machine Scm-1008 L" was used.

### <Measurement of Melt Flow Rate (MFR)>

Using the thermoplastic elastomer composition obtained in each of Examples and so forth, the melt flow rate (MGR, unit: g/10 min) was measured in according with the B method described in JIS K6922-2 (published in 2010). Specifically, the thermoplastic elastomer composition obtained in each of Examples and so forth, and a melt flow rate measurement device manufactured by Toyo Seiki Seisaku-sho, Ltd. under the trade name of "Melt Indexer G-01" were used. First, 3 g of the thermoplastic elastomer composition was added into a furnace body of the device, and then was held for 5 minutes under temperature set to 230°C. Thereafter, under the conditions of the temperature kept at 230°C and loading of 5 kg, the mass (g) of the thermoplastic elastomer composition flowing out per unit time from an opening (opening with a diameter of 1 mm) of a tubular orifice member with a diameter of 1 mm and a length of 8 mm connected to a lower part of the furnace body was measured (after the thermoplastic elastomer composition was held for 5 minutes under the temperature set to 230°C, the loading was started and then the measurement of the mass of the thermoplastic elastomer composition flowing out was started). The melt flow rate was obtained by calculating the mass (g) of the thermoplastic elastomer composition flowing out for 10 minutes.

### <Measurement of Gel Fraction>

The gel fraction (unit: %) of the thermoplastic elastomer composition obtained in each of Examples and so forth was obtained by using the corresponding one of the sheets for measurement obtained as described above. Specifically, first, a large number of sheet pieces having a size of 5 mm in length, 5 mm in length, and 2 mm in thickness were cut out from the aforementioned sheet of the thermoplastic elastomer composition, and about 1 g of the sheet pieces were collected and set as a sample for gel fraction measurement. Next, the mass of the obtained sample for measurement was measured. Separately, a 80-mesh metal mesh of stainless steel (stainless steel mesh) was prepared and the mass thereof was measured. After that, the sample for measurement was wrapped with the stainless steel mesh, and then was immersed in 300 ml of xylene, followed by reflux for 7 hours. After the reflux for 7 hours as described above, the stainless steel mesh was taken out from the xylene, was washed with toluene, then was dried by air current for 24 hours under a temperature condition at room temperature, and thereafter was further dried for 6 hours in a vacuum dryer under conditions at pressure of 1 to 10 Pa and temperature of 50°C. After the drying as described above, the mass of the stainless steel mesh containing the remaining component therein was measured, and then the mass of the remaining component was calculated by subtracting the mass of the stainless steel mesh measured in advance from the above-measured mass. Then, the gel fraction was obtained by calculating the mass of the remaining component relative to the mass of the sample for measurement (used amount) .

In this gel fraction measurement method, the "cross-linked styrene-based block copolymer" that is a component basically insoluble in xylene is considered to remain as the remaining component. Thus, the content (theoretical amount (unit: % by mass)) of the cross-linked styrene-based block copolymer relative to the total mass of the composition is also presented in Tables 1 to 3. The above content of the styrene-based block copolymer is simply referred to as "Theoretical Amount" in Tables 1 to 3.

### <IR (Infrared Spectroscopy) Measurement>

The infrared absorption spectrum (IR spectrum) on the remaining component (gel) obtained in the gel fraction measurement was measured by the ATR method using an infrared spectrometer (manufactured by Thermo Scientific under the trade name of "Nicolet iS10"), thereby examining whether or not absorption (peak) derived from the benzene ring at 1400-1450 cm⁻¹ appeared from the remaining component (gel). In Tables 1 to 3, "E" indicates that the peak derived from the benzene ring at 1400-1450 cm⁻¹ was observed, whereas "N" indicates that the peak was not observed. When the peak is observed at the position of 1400-1450 cm⁻¹, the remaining component (gel) can be determined as a component derived from the styrene-based block copolymer (such as SEBS) from the types of the materials used to prepare the composition. Since the remaining component (gel) is gelated, the peak observed at the position of 1400-1450 cm⁻¹ in the IR spectrum makes it possible to understand that the styrene-based block copolymer (such as SEBS) is cross-linked.

### (Example 1)

A mixture in which 14 g of the SEBS, 14 g of the SBS-(I), 28 g of the paraffin oil, 0.56 g of the cross-linking agent, and 1.68 g of the cross-linking aid were mixed in advance and 7 g of the maleic PP were input into a pressure kneader heated at 200°C and were plasticized by mastication for 3 minutes at a rotation speed of 100 rpm. Then, 0.007 g of the organically modified clay was further added, followed by kneading for 4 minutes under a temperature condition of 200°C to obtain a mixture in the pressure kneader. Next, 0.125 g of the compound (X1) was further added to the mixture, followed by kneading for 8 minutes under a temperature condition of 200°C to prepare a thermoplastic elastomer composition.

### (Examples 2 to 5)

Each of thermoplastic elastomer compositions was prepared in the same manner as in Example 1 except that the SBS-(II) was used in place of the SBS-(I) and the amounts of the SEBS, the SBS-(II), the cross-linking agent, and the cross-linking aid used were changed according to the proportions specified in Table 1.

### (Example 6)

A thermoplastic elastomer composition was prepared in the same manner as in Example 1 except that the SEEPS was used alone in place of the SEBS and the SBS-(I) and the amounts of the SEEPS, the cross-linking agent, and the cross-linking aid used were changed according to the proportions specified in Table 1.

### (Example 7)

A thermoplastic elastomer composition was prepared in the same manner as in Example 1 except that the SBS-(I) was not used and the amounts of the SEBS and the cross-linking aid used were changed according to the proportions specified in Table 1.

### (Example 8)

A thermoplastic elastomer composition was prepared in the same manner as in Example 1 except that the SEBS was not used and the amounts of the SBS-(I) and the cross-linking aid used were changed according to the proportions specified in Table 1.

### (Example 9)

A thermoplastic elastomer composition was prepared in the same manner as in Example 2 except that the organically modified clay was not used.

### (Comparative Example 1)

A thermoplastic elastomer composition was prepared in the same manner as in Example 7 except that the cross-linking agent and the cross-linking aid were not used.

Table 1 also presents a mass ratio of the components used to prepare the thermoplastic elastomer composition in each of Examples 1 to 9 and Comparative Example 1 (the mass proportions of the components relative to the content of the maleic PP set to 100 parts by mass).

**[Table 1]**

| | | Example 1 | Example 2 | Example 3 | Example 4 | Example 5 | Example 6 | Example 7 | Example 8 | Example 9 | Comparative Example 1 |
|---|---|---|---|---|---|---|---|---|---|---|---|
| Materials for Forming Polymer Component (parts by mass) | Maleic PP | 100 | 100 | 100 | 100 | 100 | 100 | 100 | 100 | 100 | 100 |
| | Compound (X1) | 1.7926 | 1.7926 | 1.7926 | 1.7926 | 1.7926 | 1.7926 | 1.7926 | 1.7926 | 1.7926 | 1.7926 |
| Materials for Forming Cross-linked Styrene-Based Block Copolymer (parts by mass) | SEBS | 200 | 200 | 200 | 100 | 300 | - | 400 | - | 200 | 400 |
| | SBS-(I) | 200 | - | - | - | - | - | - | 400 | - | - |
| | SBS-(II) | - | 200 | 200 | 300 | 100 | - | - | - | 200 | - |
| | SEEPS | - | - | - | - | - | 400 | - | - | - | - |
| | Cross-Linking Agent (I) | 8 | 8 | 8 | 12 | 8 | 16 | 8 | 8 | 8 | - |
| | Cross-Linking Aid | 24 | 24 | 40 | 24 | 40 | 32 | 40 | 40 | 24 | - |
| Additive Components (parts by mass) | Paraffin Oil | 400 | 400 | 400 | 400 | 400 | 400 | 400 | 400 | 400 | 400 |
| | Organically-Modified Clay | 0.1 | 0.1 | 0.1 | 0.1 | 0.1 | 0.1 | 0.1 | 0.1 | - | 0.1 |
| Total | | 933.89 | 933.89 | 949.89 | 937.89 | 949.89 | 949.89 | 949.89 | 949.89 | 933.79 | 901.89 |
| Evaluation of Properties of Composition | Gel Fraction (%) | 43.5 | 44.2 | 41.9 | 43.5 | 43.9 | 43.7 | 44.2 | 43.9 | 44.0 | 0.0 |
| | Theoretical Amount (% by mass) | 43.7 | 43.7 | 43.0 | 43.9 | 43.0 | 43.8 | 43.0 | 43.0 | 43.7 | 0.0 |
| | IR Measurement Result | E | E | E | E | E | E | E | E | E | N |
| | Compression Set (%) | 27 | 33 | 28 | 36 | 39 | 26 | 32 | 33 | 39 | 59 |
| | MFR (g/10 min) | 39 | 29 | 21 | 20 | 45 | 90 | 36.0 | 34 | 85 | 4.4 |

### (Examples 10 to 12)

Each of thermoplastic elastomer compositions was prepared in the same manner as in Example 3 except that the cross-linking agent (II) was used in place of the cross-linking agent (I) and the amount of the cross-linking aid used was changed according to the proportion specified in Table 2. Table 2 presents evaluation results of the properties of the thermoplastic elastomer compositions obtained. Table 2 presents a mass ratio of the components used to prepare each of the thermoplastic elastomer compositions (the mass proportions of the components relative to the content of the maleic PP set to 100 parts by mass).

**[Table 2]**

| | | Example 10 | Example 11 | Example 12 |
|---|---|---|---|---|
| Materials for Forming Polymer Component (parts by mass) | Maleic PP | 100 | 100 | 100 |
| | Compound (X1) | 1.7926 | 1.7926 | 1.7926 |
| Materials for Forming Cross-linked Styrene-Based Block Copolymer (parts by mass) | SEBS | 200 | 200 | 200 |
| | SBS-(II) | 200 | 200 | 200 |
| | Cross-Linking Agent (II) | 8 | 8 | 8 |
| | Cross-Linking Aid | 40 | 60 | 80 |
| Additive Components (parts by mass) | Paraffin Oil | 400 | 400 | 400 |
| | Organically-Modified Clay | 0.1 | 0.1 | 0.1 |
| Total | | 949.89 | 969.89 | 989.89 |
| Evaluation of Properties of Composition | Gel Fraction (%) | 42.1 | 43.5 | 41.9 |
| | Theoretical Amount (% by mass) | 43.0 | 42.1 | 41.2 |
| | IR Measurement Result | E | E | E |
| | Compression Set (%) | 36 | 35 | 34 |
| | MFR (g/10 min) | 42 | 47 | 45 |

### (Examples 13 and 14)

Each of thermoplastic elastomer compositions was prepared in the same manner as in Example 3 except that the cross-linking agent (III) or the cross-linking agent (IV) was used in place of the cross-linking agent (I) according to the proportion specified in Table 3. Table 3 presents evaluation results of the properties of the thermoplastic elastomer compositions obtained. Table 3 also presents the evaluation results of the properties of the thermoplastic elastomer composition obtained in Example 3. Table 3 also presents the evaluation results of the properties of the thermoplastic elastomer compositions obtained in Examples 3 and 10. Table 3 presents a mass ratio of the components used to prepare each of the thermoplastic elastomer compositions (the mass proportions of the components relative to the content of the maleic PP set to 100 parts by mass).

**[Table 3]**

| | | Example 3 | Example 10 | Example 13 | Example 14 |
|---|---|---|---|---|---|
| Materials for Forming Polymer Component (parts by mass) | Maleic PP | 100 | 100 | 100 | 100 |
| | Compound (X1) | 1.7926 | 1.7926 | 1.7926 | 1.7926 |
| Materials for Forming Cross-linked Styrene-Based Block Copolymer (parts by mass) | SEBS | 200 | 200 | 200 | 200 |
| | SBS-(II) | 200 | 200 | 200 | 200 |
| | Cross-Linking Agent (I) | 8 | - | - | - |
| | Cross-Linking Agent (II) | - | 8 | - | - |
| | Cross-Linking Agent (III) | - | - | 8 | - |
| | Cross-Linking Agent (IV) | - | - | - | 8 |
| | Cross-Linking Aid | 40 | 40 | 40 | 40 |
| Additive Components (parts by mass) | Paraffin Oil | 400 | 400 | 400 | 400 |
| | Organically-Modified Clay | 0.1 | 0.1 | 0.1 | 0.1 |
| Total | | 949.89 | 949.89 | 949.89 | 949.89 |
| Evaluation of Properties of Composition | Gel Fraction (%) | 41.9 | 42.1 | 44.5 | 44.1 |
| | Theoretical Amount (% by mass) | 43.0 | 43.0 | 43.0 | 43.0 |
| | IR Measurement Result | E | E | E | E |
| | Compression Set (%) | 28 | 36 | 40 | 37 |
| | MFR (g/10 min) | 21 | 42 | 56 | 48 |

As is apparent from the results presented in Tables 1 to 3, in the thermoplastic elastomer composition obtained in each of Examples 1 to 14, the gel fraction and the theoretical amount (the content of the cross-linked styrene-based block copolymer: a proportion of the total mass of the styrene-based block copolymer and the cross-linking agent to the total mass of the composition (% by mass)) have approximately equal values and the peak derived from the benzene ring was observed in the IR measurement. For these and other reasons, it can be understood that the gelated remaining component is basically a reaction product of the styrene-based block copolymer and the cross-linking agent (the cross-linked styrene-based block copolymer). Thus, in the thermoplastic elastomer compositions obtained in Examples 1 to 14, it is found that the styrene-based block copolymer components (SEBS, SBS, SEEPS) used for the production thereof are cross-linked in the compositions.

As is apparent from the results presented in Tables 1 to 3, it is confirmed that all the thermoplastic elastomer compositions obtained in Examples 1 to 14 are superior to the thermoplastic elastomer composition obtained in Comparative Example 1 in terms of the resistance to the compression set at high temperature and are also superior thereto in the flowability during processing while having higher MFR values. In particular, in all the thermoplastic elastomer compositions obtained in Examples 1 to 14, the compression set at high temperature (measurement conditions of 125°C and 22 hours) was equal to or less than 40%.

As is apparent from the results presented in Table 1, a comparison between Example 7 and Comparative Example 1 which are different only in whether the cross-linking agent (I) and the cross-linking aid were used in the preparation of the composition, and are the same in the other things such as the amounts of the other components used leads to the finding that the thermoplastic elastomer composition containing the cross-linked SEBS in the composition (Example 7) has a smaller value of the compression set (%) under the high temperature conditions (122°C and 22 hours) than that of the thermoplastic elastomer composition containing only the SEBS not cross-linked (Comparative Example 1) and therefore is superior thereto in the resistance to the compression set at high temperature. Moreover, the thermoplastic elastomer composition containing the cross-linked SEBS in the composition (Example 7) has a higher MFR value and therefore has higher flowability and better workability than those of the thermoplastic elastomer composition containing only the SEBS not cross-linked (Comparative Example 1).

The evaluation results of the properties in Examples 1 and 2 presented in Table 1 lead to the finding that the resistance to compression set and the flowability are better in the case of using the radial SBS (SBS-(I)) in combination with the SEBS than in the case of using the linear SBS (SBS-(II)) in combination with the SEBS.

Moreover, as a result of checking a difference in the effect based on the mass proportion of the cross-linking aid among the evaluation results of the properties in Examples 2 and 3 presented in Table 1 and the evaluation results of the properties in Examples 10 to 12 presented in Table 2, it is found that the higher the mass proportion of the cross-linking aid, the higher the level of resistance to compression set. The present inventors presume that this is because use of a larger amount of the cross-linking aid allows the cross-linking aid to act as start points of cross-linking and cause the cross-linking in a star form. On the other hand, in the evaluation results of the properties in Examples 10 to 12 presented in Table 2, the MFR value is higher in the case where the mass of the cross-linking aid is about 7.5 times as large as the mass of the cross-linking agent (Example 11) than in the other cases.

In addition, from the evaluation results of the properties in Examples 3, 9, 12, and 13 presented in Table 3, it is found that use of a cross-linking agent having a higher one-minute half-life temperature results in a higher level of resistance to compression set (note that the order of the cross-linking agents (I) to (IV) in terms of the degree of one-minute half-life temperature is the cross-linking agent (I), the cross-linking agent (II), the cross-linking agent (IV), and the cross-linking agent (III) in descending order). From this result, the present inventors presume that use of a cross-linking agent having a higher one-minute half-life temperature enables more efficient formation of cross-linkages.

### [Industrial Applicability]

As described above, according to the present invention, it is possible to provide a thermoplastic elastomer composition that can have excellent resistance to compression set at high temperature and achieve sufficiently high flowability. Thus, the thermoplastic elastomer composition of the present invention has the excellent resistance to compression set at high temperature and therefore is particularly useful as materials and the like for producing automobile parts and the like to be used under high temperature conditions.

## Claims

1. A thermoplastic elastomer composition comprising the following components (I) and (II):
[component (I)] at least one polymer component selected from the group consisting of polymers (A) each of which has a side chain (a) containing a hydrogen-bond cross-linkable moiety having a carbonyl-containing group and/or a nitrogen-containing heterocycle and has a glass transition point of 25°C or below, and polymers (B) each of which contains a hydrogen-bond cross-linkable moiety and a covalent-bond cross-linking moiety in a side chain and has a glass-transition point of 25°C or below; and
[component (II)] a cross-linked styrene-based block copolymer which contains a covalent-bond cross-linking moiety and no hydrogen-bond cross-linkable moiety.

2. The thermoplastic elastomer composition according to claim 1, wherein the component (II) is a reaction product of a styrene-based block copolymer having a cross-linkable double bond in a main chain and a cross-linking agent for reacting with the cross-linkable double bond and thereby forming a cross-linking moiety by a covalent bond.

3. The thermoplastic elastomer composition according to claim 2, wherein the styrene-based block copolymer having a cross-linkable double bond in a main chain is at least one selected from the group consisting of styrene-butadiene-styrene block copolymers, styreneisoprene-styrene block copolymers, styrene-isoprene-butadiene-styrene block copolymers, styrene-ethylene-butylene-styrene block copolymers, styrene-ethylene-propylene-styrene block copolymers, and styrene-ethylene-ethylene-propylene-styrene block copolymers.

4. The thermoplastic elastomer composition according to any one of claims 1 to 3, wherein the covalent-bond cross-linking moiety that cross-links molecules in the styrene-based block copolymer in the component (II) includes at least one cross-linkage selected from the group consisting of a carbon cross-linkage, an oxygen cross-linkage, and a sulfur cross-linkage.

5. The thermoplastic elastomer composition according to any one of claims 1 to 4, wherein a content of the component (II) relative to a total mass of the composition is 0.1 to 80% by mass.

6. The thermoplastic elastomer composition according to any one of claims 1 to 5, wherein the main chain of each of the polymers (A) and (B) in the component (I) is at least one selected from the group consisting of polypropylenes, polyethylenes, ethylene-butene copolymers, ethylene-propylene copolymers, and ethylene-octene copolymers.
